(19) Europäisches Patentamt
European Patent Office
Office européen des brevets

(11) **EP 4 611 384 A1**

(12) **EUROPEAN PATENT APPLICATION**

(43) Date of publication:
**03.09.2025 Bulletin 2025/36**

(21) Application number: **25157031.3**

(22) Date of filing: **11.02.2025**

(51) International Patent Classification (IPC):
**H04N 23/61** (2023.01)    **H04N 21/00** (2011.01)

(52) Cooperative Patent Classification (CPC):
**H04N 23/61; H04N 21/2743; H04N 21/4223; H04N 21/4316; H04N 21/64322; H04N 21/816; H04N 23/698**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2024 JP 2024031230**

(71) Applicant: **Ricoh Company, Ltd.**
**Tokyo 143-8555 (JP)**

(72) Inventors:
• **HINOHARA, Hiroshi**
  **Tokyo, 143-8555 (JP)**
• **HOMMA, Takeshi**
  **Tokyo, 143-8555 (JP)**

(74) Representative: **SSM Sandmair**
**Patentanwälte Rechtsanwalt Partnerschaft mbB**
**Joseph-Wild-Straße 20**
**81829 München (DE)**

(54) **DISPLAY TERMINAL, DISPLAY METHOD, AND CARRIER MEANS**

(57)     A display terminal (9) displays a moving image previously obtained through imaging performed by an imaging device (10) and a map indicating a position related to the imaging.

The display terminal (9) includes a reception unit (501, 92) to receive selection of an image identifying an object on the map. The display terminal (9) includes a display control unit (501, 94) to display, on a display (507), at least a partial area of a captured image corresponding to an elapsed playback time of the moving image obtained at an imaging position, based on a distance to the image identifying the object. The imaging position is one of a plurality of imaging positions on a past movement path of the imaging device performing the imaging.

## FIG. 1A

**Description**

BACKGROUND

Technical Field

The present disclosure relates to a display terminal, a display method, and a carrier means.

Related Art

Currently, wide-field images with a wide field of view, such as 360-degree images (spherical images, omnidirectional images, or all-round images) capturing the entire surrounding area, are known as imaging ranges that include areas not covered by the regular field of view.

When such an entire wide-field image is displayed on a display terminal, the wide-field image is curved, and a user has difficulty viewing the displayed wide-field image. To cope with this, the display terminal displays a predetermined-area image indicating a predetermined area in the wide-field image to allow the user to view the predetermined-area image.

Further, a technique for extracting a part including a landmark in a moving image to allow a user to search for a main part in the moving image to view has been disclosed (see, for example, Japanese Unexamined Patent Publication Application No. 2013-183218).

In the related art, when a landmark is displayed for 10 seconds in a moving image, there are still image frames in which the landmark is displayed in a large size due to the imaging device approaching the landmark, and there are still image frames in which the landmark is displayed in a small size due to the imaging device moving away from the landmark. Accordingly, an object desired by the user may be displayed in a small size and may be difficult to see.

SUMMARY

According to an aspect of the present disclosure, a display terminal displays a moving image previously obtained through imaging performed by an imaging device and a map indicating a position related to the imaging. The display terminal includes a reception unit to receive selection of an image identifying an object on the map. The display terminal includes a display control unit to display, on a display, at least a partial area of a captured image corresponding to an elapsed playback time of the moving image obtained at an imaging position, based on a distance to the image identifying the object. The imaging position is one of a plurality of imaging positions on a past movement path of the imaging device performing the imaging.

According to an aspect of the present disclosure, a display method includes displaying on a display, a moving image previously obtained through imaging performed by an imaging device and a map indicating a position related to the imaging, and receiving selection of an image identifying an object on the map. The display method includes displaying, on the display, at least a partial area of a captured image corresponding to an elapsed playback time of the moving image obtained at an imaging position, based on a distance to the image identifying the object. The imaging position is one of a plurality of imaging positions on a past movement path of the imaging device performing the imaging.

According to an aspect of the present disclosure, a carrier means carrying computer-readable codes for controlling a computer to carry out the above-described method.

According to an aspect of the present disclosure, a still image in which a predetermined object is most visible in a moving image can be searched for.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1A is a left side view of an imaging device;
FIG. 1B is a front view of the imaging device of FIG. 1A;
FIG. 1C is a plan view of the imaging device of FIG. 1A;
FIG. 2 is a diagram illustrating how the imaging device of FIGS. 1A to 1C is used;
FIG. 3A is a diagram illustrating a hemispherical image (front side) captured by the imaging device of FIGS. 1A to 1C;
FIG. 3B is a diagram illustrating a hemispherical image (back side) captured by the imaging device of FIGS. 1A to 1C;
FIG. 3C is a diagram illustrating an image represented by Mercator projection;
FIG. 4A is a diagram illustrating how a Mercator projection image covers the surface of a sphere;
FIG. 4B is a diagram illustrating a spherical image;
FIG. 5 is an illustration of the relative positions of a virtual camera and a predetermined area in a case where a spherical image is represented as a surface area of a three-dimensional solid sphere;
FIG. 6A is a perspective view of FIG. 5;
FIG. 6B is a diagram illustrating a predetermined-area image of FIG. 6A being displayed on a display;
FIG. 6C is a diagram illustrating a predetermined area after the viewpoint of a virtual camera in FIG. 6A is changed;
FIG. 6D is a diagram illustrating a predetermined-area image of FIG. 6C being displayed on a display;
FIG. 7 is a diagram illustrating points in a three-dimensional Euclidean space defined in spherical coordinates;

FIG. 8 is a diagram illustrating a relation between a predetermined area and a point of interest;

FIG. 9 is a schematic diagram of a communication system;

FIG. 10 is a block diagram illustrating a hardware configuration of the imaging device of FIGS. 1A to 1C;

FIG. 11 is a block diagram illustrating a hardware configuration of a relay device;

FIG. 12 is a block diagram illustrating a hardware configuration of any one of a communication control system and a communication terminal;

FIG. 13 is a block diagram illustrating a functional configuration of the communication system of FIG. 9;

FIG. 14 is a schematic diagram of a user/device management table;

FIG. 15 is a schematic diagram of a virtual room management table;

FIG. 16 is a schematic diagram of a position information management table;

FIG. 17 is a sequence diagram illustrating a communication process in relation to content data in the communication system of FIG. 9;

FIG. 18 is a sequence diagram illustrating a process for starting image recording and sound recording in the communication system of FIG. 9;

FIG. 19 is a sequence diagram illustrating a process for stopping image recording and sound recording in the communication system of FIG. 9;

FIG. 20 is a sequence diagram illustrating a process for playback of a recorded image and recorded sound in the communication system of FIG. 9;

FIG. 21 is a diagram illustrating a recorded data selection screen;

FIG. 22 is a flowchart of a playback process;

FIG. 23 is a diagram illustrating a map/moving image playback screen displayed by a communication terminal;

FIG. 24 is a diagram illustrating a relationship between each of positions on a past movement path and the distance to a schematic image of an object;

FIG. 25 is a diagram illustrating another map/moving image playback screen displayed by a communication terminal; and

FIG. 26 is a diagram illustrating still another map/-moving image playback screen displayed by a communication terminal.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to the attached drawings.

Overview of Spherical Image

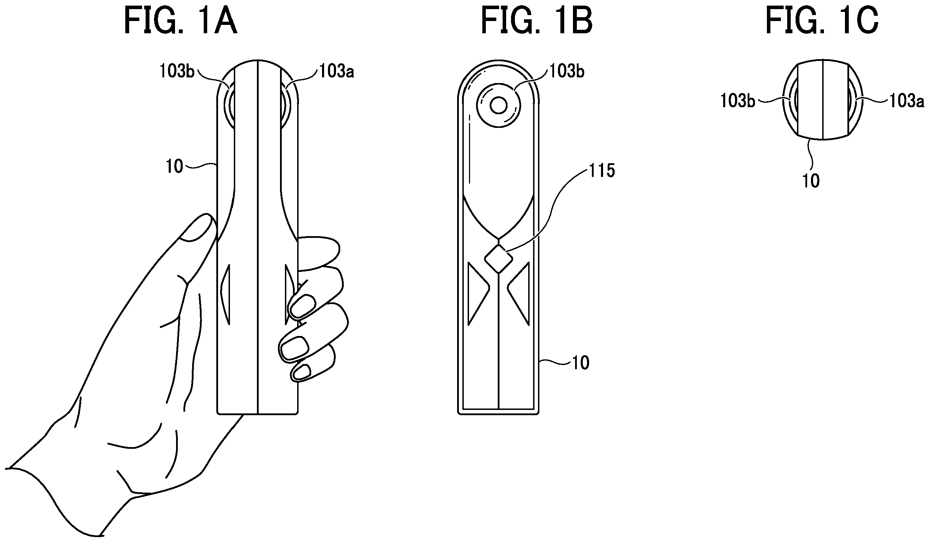

A method for generating a spherical image is described with reference to FIGS. 1A to to 8. The spherical image is also referred to as a spherical panoramic image or a 360-degree panoramic image. The spherical image is an example of a wide-field video (wide-field moving image) having a wide field of view. The wide-field image includes a 180-degree panoramic image.

An external view of an imaging device 10 is described with reference to FIG. 1 FIGS. 1A to 1C. The imaging device 10 is a digital camera for acquiring an image to be a spherical image. FIG. 1A, FIG. 1B, and FIG. 1C are a left side view, a front view, and a plan view, respectively, of the imaging device 10.

As illustrated in FIG. 1A, the imaging device 10 is sized to be held by hand. As illustrated in FIGS. 1A to 1C, the imaging device 10 is provided with an imaging element 103a on the front side (anterior side) and an imaging element 103b on the back side (rear side) in the upper section. As illustrated in FIG. 1B, the imaging device 10 is also provided with an operation unit 115 such as a shutter button on the opposite side of the back side.

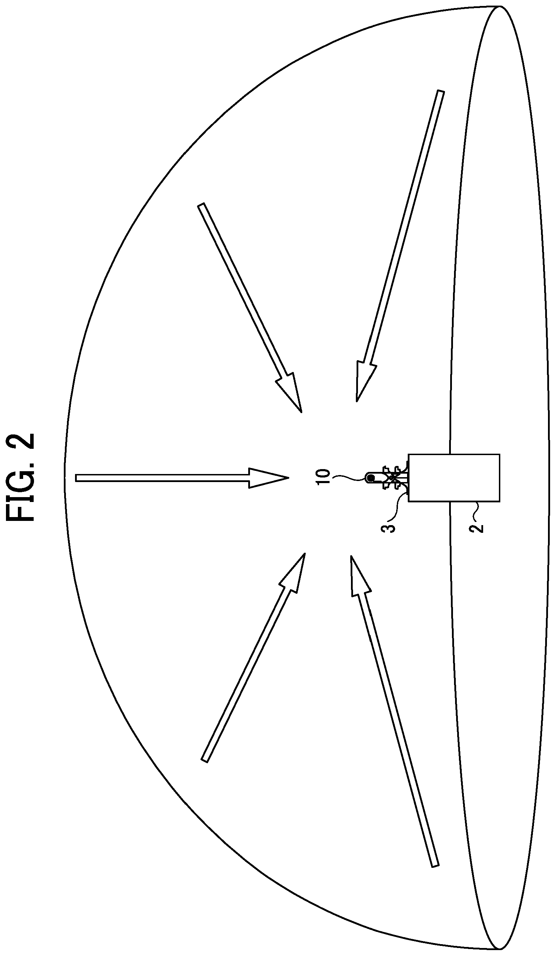

The usage scenario of the imaging device 10 is described below with reference to FIG. 2. FIG. 2 is an illustration of an example of how the imaging device 10 is used. As illustrated in FIG. 2, the imaging device 10 is communicably connected to a relay device 3 installed on a table 2 and is used to capture or acquire an image including the surrounding subjects and scenery. The imaging elements 103a and 103b illustrated in FIG. 1A to FIG. 1C capture the surrounding subjects of the user to obtain two hemispherical images. If the imaging device 10 does not transmit the captured spherical images to another communication terminal or system, the relay device 3 is not needed.

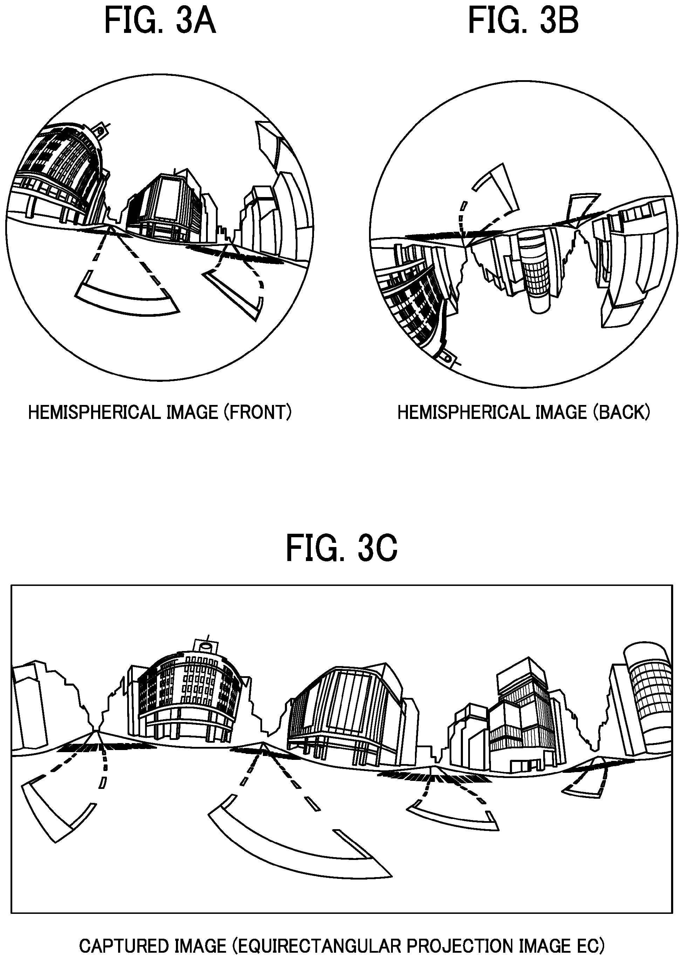

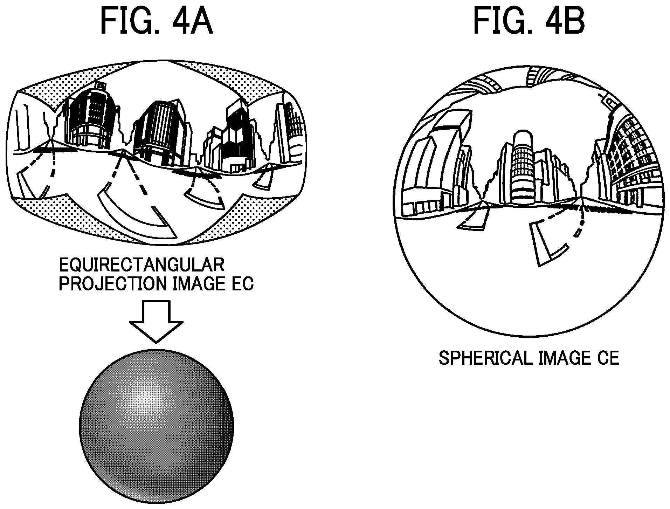

An overview of the process of generating a spherical image from images captured by the imaging device 10 is described below with reference to FIG. 3A to FIG. 4B. FIG. 3A is a diagram illustrating a hemispherical image (front side) captured by the imaging device 10. FIG. 3B is a diagram illustrating a hemispherical image (back side) captured by the imaging device 10. FIG. 3C is a diagram illustrating an image in equirectangular projection. The image in equirectangular projection may be referred to as an "equirectangular projection image." For example, an image in Mercator projection may be used. The image in the Mercator projection may be referred to as a "Mercator image." FIG. 4A is a diagram illustrating an equirectangular projection image to cover a sphere. FIG. 4B is a diagram illustrating a spherical image. The "equirectangular projection image" is a spherical image in an equirectangular format and is an example of the wide-field image described above.

As illustrated in FIG. 3A, an image captured by the imaging element 103a is a hemispherical image (front side) curved by a wide-angle lens 102a such as a fisheye lens, which is described later. As illustrated in FIG. 3B, an image captured by the imaging element 103b is a hemispherical image (back side) curved by a wide-angle lens 102b such as a fisheye lens, which is described later. The imaging device 10 combines the hemispherical image (front side) and the hemispherical image (rear side) inverted by 180 degrees to create an equirectangular projection image EC as illustrated in FIG. 3C.

The imaging device 10 uses Open Graphics Library for Embedded Systems (OpenGL ES) to map the equirectangular projection image EC in a manner that the sphere surface is covered as illustrated in FIG. 4A to generate a spherical image CE as illustrated in FIG. 4B. In other words, the spherical image CE is represented as an image corresponding to the equirectangular projection image EC oriented toward the center of the sphere. OpenGL ES is a graphic library used for visualizing two-dimensional (2D) data and three-dimensional (3D) data. OpenGL ES is an example of software that executes image processing. Software other than Open ES may be used to generate the spherical image CE. The spherical image CE is either a still image or a moving image. Although the imaging device 10 generates a spherical image in the above description, a communication control system 5, a communication terminal 7, or a communication terminal 9 may perform substantially the same image processing or a part of the image processing instead of the imaging device 10.

A Mercator image is mapped to cover a sphere surface using OpenGL ES as illustrated in FIG. 4A to generate a spherical image as illustrated in FIG. 4B. In other words, the spherical image is represented as an image corresponding to the Mercator image oriented toward the center of the sphere. OpenGL ES is a graphic library used for visualizing 2D data and 3D data.

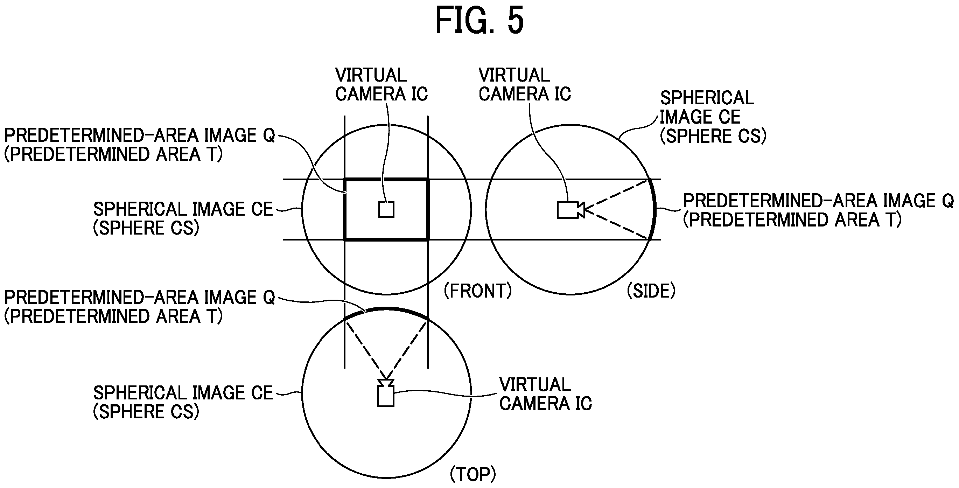

As described above, since the spherical image CE is an image mapped to the sphere surface to cover the sphere surface, a part of the image may look distorted when viewed by the user, giving a feeling of strangeness. To cope with this, each of the communication terminals 7 and 9 displays a predetermined area that is a part of the spherical image CE as a planar image with little curvature, thus allowing display without giving a feeling of strangeness to the user. Such an image representing a part of a spherical image may be referred to as a predetermined-area image in the following description. A predetermined area and a predetermined-area image are described with reference to FIGS. 5 to 8.

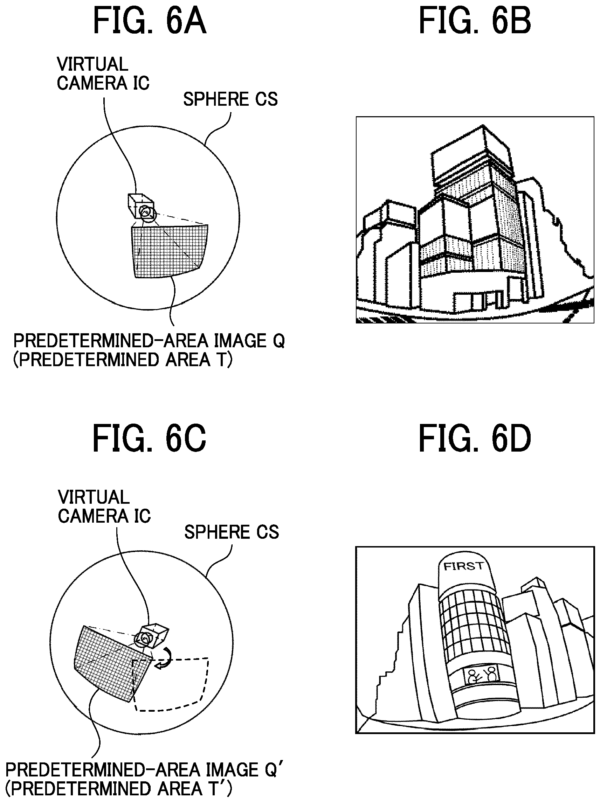

FIG. 5 is an illustration of the relative positions of a virtual camera IC and a predetermined area T when a spherical image is represented as a three-dimensional solid sphere. The virtual camera IC corresponds to a position of the virtual viewpoint of a user viewing the spherical image CE represented as a surface area of the three-dimensional solid sphere. FIG. 6A is a perspective view of FIG. 5. FIG. 6B is a diagram illustrating a predetermined-area image of FIG. 6A being displayed on a display. FIG. 6C is a diagram illustrating a predetermined area after the viewpoint of a virtual camera in FIG. 6A is changed. FIG. 6D is a diagram illustrating a predetermined-area image of FIG. 6C being displayed on a display.

Assuming that the spherical image CE having been generated is the surface area of a solid sphere CS, the virtual camera IC is inside of the spherical image CE as illustrated in FIG. 5. The predetermined area T in the spherical image CE is an imaging area of the virtual camera IC. Specifically, the predetermined area T is specified by field-of-view information indicating an imaging direction and a field of view of the virtual camera IC in a three-dimensional virtual space containing the spherical image CE. The field-of-view information may be referred to as "area information."

Further, zooming in the predetermined area T is also expressed by bringing the virtual camera IC closer to or away from the spherical image CE. A predetermined-area image Q is an image of the predetermined area T in the spherical image CE. The predetermined area T is defined by a field of view $\alpha$ and a distance f from the virtual camera IC to the spherical image CE.

When the virtual viewpoint of the virtual camera IC is moved (changed) from the state illustrated in FIG. 6A to the right (left in the drawing) as illustrated in FIG. 6C, the predetermined area T in the spherical image CE is moved to a predetermined area T' accordingly. As a result, the predetermined-area image Q displayed on a predetermined display is changed to a predetermined-area image Q'. As a result, the image displayed on the predetermined display changes from the image illustrated in FIG. 6B to the image illustrated in FIG. 6D.

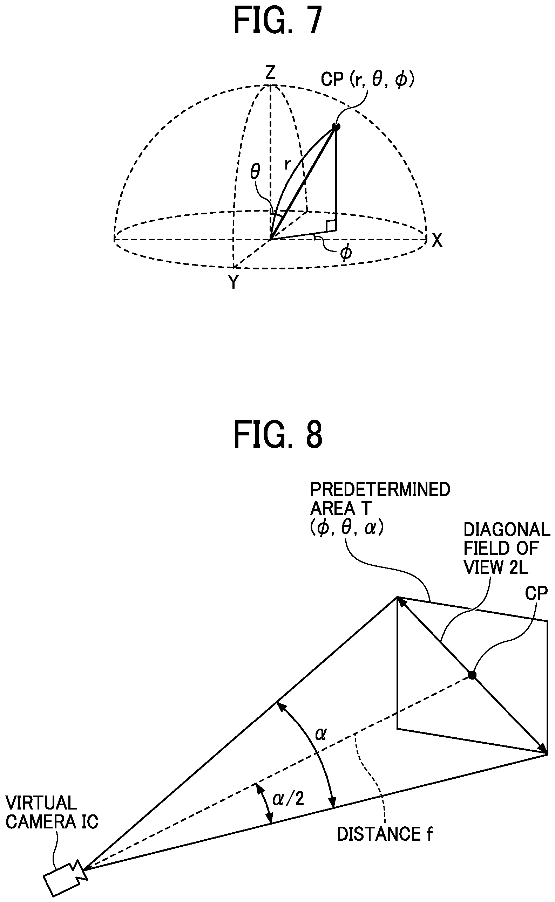

A relation between the field-of-view information and the image of the predetermined area T is described below with reference to FIGS. 7 and 8.

FIG. 7 is a diagram illustrating a point in a three-dimensional Euclidean space according to spherical coordinates. FIG. 8 is a diagram illustrating a relation between the predetermined area and a point of interest (center point).

Positional coordinates (r, 0, φ) are given when the center point CP illustrated in FIG. 7 is represented by a spherical polar coordinate system. The positional coordinates (r, θ, φ) represent a radius vector, a polar angle, and an azimuth angle. The radius vector r is the distance from the origin of a three-dimensional virtual space including the spherical image to any point (the center point CP in FIG. 8). Accordingly, the radius vector r is equal to the distance "f" illustrated in FIG. 8.

Further, as illustrated in FIG. 8, when the center of the predetermined area T that is the imaging area of the virtual camera IC is considered as the center point CP in FIG. 7, a trigonometric function equation expressed by the following (Formula 1) is satisfied.

$$(L/f) = \tan(\alpha/2) \text{ (Formula 1)}$$

"f" denotes the distance from the virtual camera IC to the center point CP of the predetermined area T. "L" is the distance between the center point CP and a given vertex of the predetermined area T (2L is a diagonal line). "α" is a field of view. In this case, the field-of-view information for specifying the predetermined area T can be represented by pan (Θ), tilt (φ), and fov (α). Zooming of the predetermined area T is expressed by enlarging or reducing a range (arc) of the field angle α.

Overview of Communication System

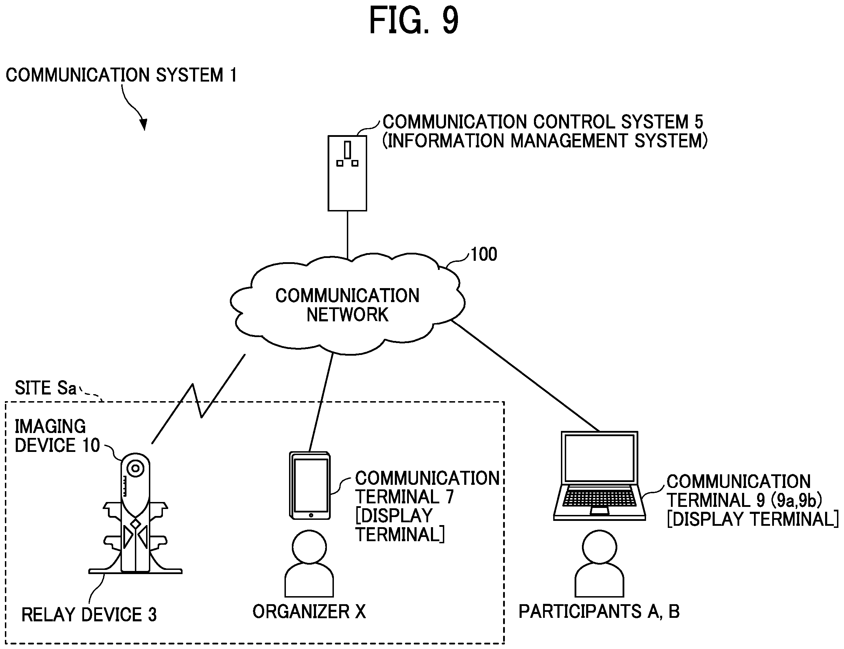

An overview of a communication system 1 is described below with reference to FIG. 9. FIG. 9 is a schematic diagram of the communication system 1.

As illustrated in FIG. 9, the communication system 1 includes the imaging device 10, the relay device 3, the communication terminal 7, and the communication terminal 9 (communication terminals 9a and 9b). The communication terminals 9a and 9b are collectively referred to as "communication terminal 9." Each of the communication terminals 7 and 9 may be referred to as a "display terminal" that displays, for example, an image.

The imaging device 10 is a digital camera for obtaining a wide-field image, such as a spherical image, as described above. The relay device 3 has a cradle function for charging the imaging device 10 and transmitting and receiving data to and from the imaging device 10. The relay device 3 can communicate with the imaging device 10 via a contact point and can communicate with the communication control system 5 via a communication network 100. The communication network 100 includes the Internet, a local area network (LAN), and a (wireless) router.

The communication control system 5 is, for example, a computer, and can communicate with the relay device 3 and the communication terminals 7 and 9 via the communication network 100. The communication control system 5 manages, for example, field-of-view information, and thus can be referred to as an "information management system."

The communication terminals 7 and 9 are computers such as notebook personal computers (PCs), and can communicate with the communication control system 5 via the communication network 100. Each of the communication terminals 7 and 9 is installed with OpenGL ES and creates a predetermined-area image (see FIG. 6) from a spherical image received from the communication control system 5. The communication control system 5 may be configured by a single computer or a plurality of computers.

Further, the imaging device 10 and the relay device 3 are installed at predetermined positions by an organizer (user) X on a site Sa such as a construction site, exhibition venue, educational institution, or medical facility. The communication terminal 7 is operated (used) by the organizer X. The communication terminal 9a is operated (used) by a participant (user) A such as a viewer at a remote location from the site Sa. The communication terminal 9b is operated (used) by a participant (user) B such as a viewer at a remote location from the site Sa. The participant A and participant B may be at the same location or at different locations.

The communication control system 5 transmits (distributes) the wide-field image obtained from the imaging device 10 via the relay device 3 to the communication terminals 7 and 9. The communication control system 5 transmits (distributes) a planar image obtained from each communication terminal 7 or 9 to the communication terminals 7 and 9. The wide-field image may be a moving image (wide-field moving image) or a still image (wide-field still image).

Hardware Configuration

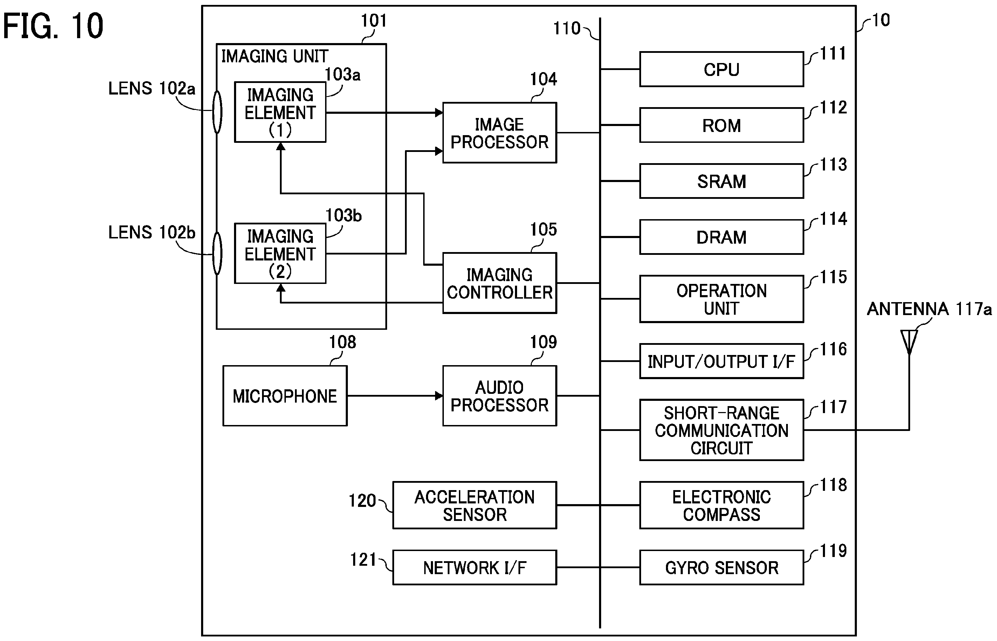

Hardware configurations of the imaging device 10, the relay device 3, the communication terminal 7, and the communication terminal 9 are described in detail with reference to FIGS. 10 to 12.

Hardware Configuration of Imaging Device

FIG. 10 is a block diagram illustrating a hardware configuration of the imaging device 10. As illustrated in FIG. 10, the imaging device 10 includes an imaging unit 101, an image processor 104, an imaging controller 105, a microphone 108, an audio processor 109, a central processing unit (CPU) 111, a read-only memory (ROM) 112, a static random-access memory (SRAM) 113, a dynamic random-access memory (DRAM) 114, the operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121.

The imaging unit 101 includes wide-angle lenses 102a and 102b (collectively referred to as lens 102 in the following description unless they need to be distinguished from each other), each having a field view of equal to or greater than 180 degrees so as to form a hemispherical image. The imaging unit 101 further includes the two imaging elements 103a and 103b corresponding to the lenses 102a and 102b respectively.

The imaging elements 103a and 103b each of which includes an imaging sensor such as a complementary metal oxide semiconductor (CMOS) sensor and a charge-coupled device (CCD) sensor, a timing generation circuit, and a group of registers. The imaging sensor converts an optical image formed by, for example, the lenses 102a and 102b into electrical signals to output image data. The timing generation circuit generates, for example, horizontal or vertical synchronization signals and pixel clocks for the imaging sensor. In the group of registers, for example, various commands and parameters for operations of the imaging elements 103a and 103b are set. The configuration in which the imaging unit 101 includes two wide-angle lenses is merely an example, and the imaging unit 101 may include a single wide-angle lens, or three or more wide-angle lenses.

Each of the imaging elements 103a and 103b of the imaging unit 101 is connected to the image processor 104 via a parallel I/F bus. By contrast, each of the imaging elements 103a and 103b of the imaging unit 101 is connected to the imaging controller 105 via a serial I/F bus, such as an internet integrated circuit (I2C) bus.

The image processor 104, the imaging controller 105, and the audio processor 109 are connected to the CPU 111 via a bus 110. Further, the ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires image data from each of the imaging elements 103a and 103b via the parallel I/F bus and performs predetermined processing on the image data. Then, the image processor 104 performs image data combining to generate equirectangular projection image data (an example of a wide-field image), which is described later.

The imaging controller 105 functions as a master device while each of the imaging elements 103a and 103b functions as a slave device, and the imaging controller 105 sets commands in the group of registers of each of the imaging elements 103a and 103b through the I2C bus. The image controller 105 receives commands from the CPU 111. The imaging controller 105 obtains status data of the group of registers of each of the imaging elements 103a and 103b through the I2C bus and transmits the status data to the CPU 111.

The imaging controller 105 instructs the imaging elements 103a and 103b to output the image data at a time when the shutter button of the operation unit 115 is pressed. In some cases, the imaging device 10 displays a preview image on a display (e.g., a display of an external terminal such as a smartphone that performs short-range communication with the imaging device 10 through the short-range communication circuit 117) or displays a moving image (movie). In the case of displaying a moving image, the image data is continuously output from the imaging elements 103a and 103b at a predetermined frame rate (frames per minute).

Further, the imaging controller 105 operates in conjunction with the CPU 111 to synchronize the output timings of image data between the imaging elements 103a and 103b. The imaging device 10 according to the present embodiment does not include a display unit (display). However, in some embodiments, the imaging device 10 may include a display. The microphone 108 converts sound into audio data (signals).

The audio processor 109 obtains the audio data from the microphone 108 through an I/F bus and performs predetermined processing on the audio data.

The CPU 111 controls the entire operation of the imaging device 10 and executes predetermined processing.

The ROM 112 stores various programs for execution by the CPU 111. Each of the SRAM 113 and the DRAM 114 operates as a working memory to store programs to be executed by the CPU 111 or data currently processed. More specifically, in one example, the DRAM 114 stores image data currently processed by the image processor 104 and equirectangular projection image data on which processing has been performed.

The operation unit 115 collectively refers to various operation buttons, a power switch, a shutter button, and a touch panel that functions both as a display for information and as an input device, and can be used in combination. The operation unit 115 allows the user operating the operation unit 115 to input various image capturing (image capturing) modes or image capturing (image capturing) conditions.

The input/output I/F 116 collectively refers to an interface circuit, such as a universal serial bus (USB) I/F, for an external medium such as a secure digital (SD) card or a personal computer. The input/output I/F 116 supports at least one of wired and wireless communications. The equirectangular projection image data stored in the DRAM 114 can be stored in an external medium via the input/output I/F 116 or transmitted to an external terminal (apparatus) via the input/output I/F 116, as appropriate.

The short-range communication circuit 117 communicates with an external terminal (apparatus) via the antenna 117a of the imaging device 10 by short-range wireless communication such as near field communication (NFC), BLUETOOTH (registered trademark), and Wi-Fi. The short-range communication circuit 117 transmits the equirectangular projection image data to the external terminal (apparatus).

The electronic compass 118 calculates the orientation of the imaging device 10 from the Earth's magnetism to output orientation information. The orientation information is an example of related information that is metadata described in compliance with Exif and is used for image processing such as image correction of captured images. The related information also includes an imaging date and time, that indicates the date and time when the image is captured, and a data size of the image data.

The gyro sensor 119 detects the change in tilt of the imaging device 10 (roll, pitch, yaw) with the movement of the imaging device 10. The change in tilt is one example of the related information (metadata) described in compliance with Exif, and used for image processing such as image correction performed on a captured image.

The acceleration sensor 120 detects acceleration in three axial directions.

The imaging device 10 can also calculate the attitude (tilt with respect to the direction of gravity) of the own device (imaging device 10) using, for example, the electronic compass 118 and the acceleration sensor 120. Further, the imaging device 10 increases the accuracy of image correction by the acceleration sensor 120.

The network I/F 121 is an interface for data communication via such as a router using the communication network 100 such as the Internet. The hardware configuration of the imaging device 10 is not limited to the above, and may be any configuration as long as the functional configuration of the imaging device 10 can be implemented. At least a part of the hardware configuration may be implemented by the relay device 3 or the communication network 100.

Hardware Configuration of Relay Device

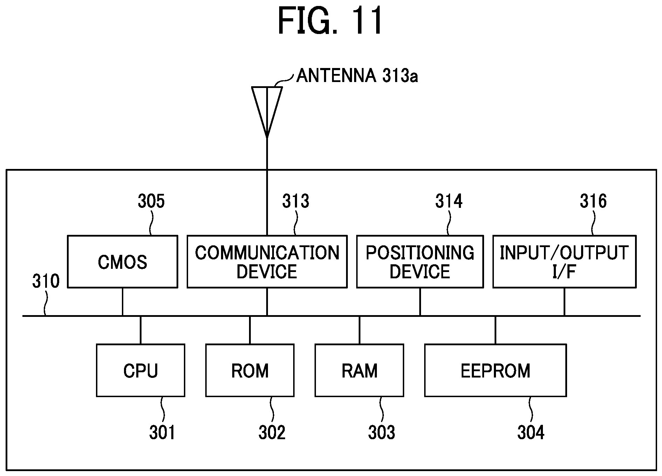

FIG. 11 is a block diagram illustrating a hardware configuration of the relay device 3. The relay device 3 having the hardware configuration illustrated in FIG. 11 has a cradle with a wireless communication function.

As illustrated in FIG. 11, the relay device 3 includes a CPU 301, ROM 302, RAM 303, electrically erasable and programmable ROM (EEPROM) 304, a CMOS sensor 305, a bus line 310, a communication device 313, an antenna 313a, a positioning device 314, and an input/output I/F 316.

The CPU 301 controls the entire operation of the relay device 3. The ROM 302 stores a control program such as an initial program loader (IPL) used for operating the CPU 301. The RAM 303 is used as a working area for the CPU 301.

The EEPROM 304 reads or writes under the control of the CPU 301. The EEPROM 304 stores an operating system (OS) and other programs executed by the CPU 301, and various data.

The CMOS sensor 305 is a solid-state imaging element that images a subject under the control of the CPU 301 and obtains image data.

The communication device 313 communicates with the communication network 100 by a wireless communication signal using the antenna 313a.

The positioning device 314 receives a positioning signal including position information (latitude, longitude, and altitude) of the relay device 3 using a global navigation satellite system (GNSS) satellite such as a global positioning system (GPS) satellite or using an indoor MEssaging system (IMES) as an indoor GPS.

In the present embodiment, receiving a positioning signal including position information using a GNSS satellite such as a GPS satellite or using an IMES as an indoor GPS has been described. However, the present disclosure is not limited to this. For example, a positioning signal including position information by image processing such as visual simultaneous localization and mapping (vSLAM) may be received.

The input/output I/F 316 is an interface circuit, such as a USB I/F, electrically connected to the input/output I/F 116 of the imaging device 10. The input/output I/F 316 supports at least one of wired and wireless communications.

The bus line 310 includes an address bus and a data bus. The bus line 310 electrically connects the components, such as the CPU 301, with each other.

Hardware Configuration of Communication Control System/Communication Terminal

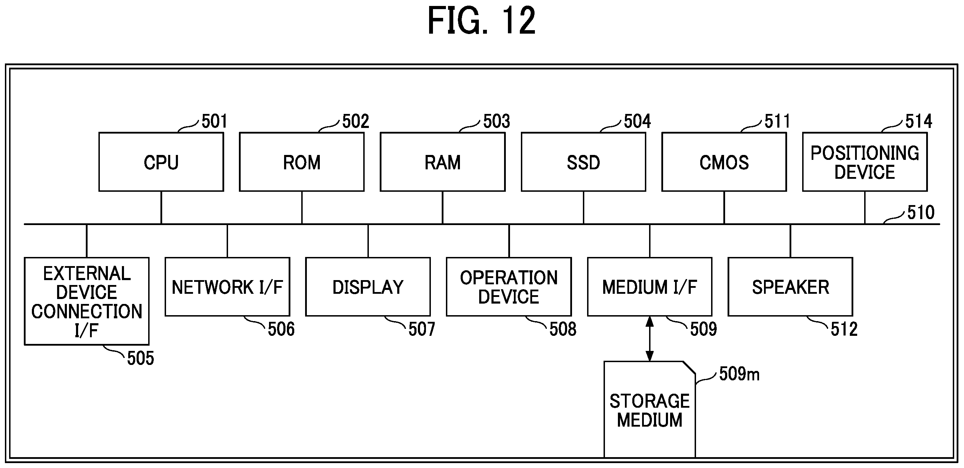

FIG. 12 is a block diagram illustrating a hardware configuration of the communication control system 5. The hardware configuration of each of the communication terminals 7 and 9 is the same as that of the communication control system 5, and thus the description thereof is omitted.

As illustrated in FIG. 12, the communication control system 5 includes, as a computer, a CPU 501, a ROM 502, a RAM 503, a solid-state drive (SSD) 504, an external device connection I/F 505, a network I/F 506, a display 507, an operation device 508, a medium I/F 509, a bus line 510, a CMOS sensor 511, a speaker 512, and a positioning device 514.

The CPU 501 controls the entire operation of the communication control system 5. The ROM 502 stores programs used for driving the CPU 501, such as an IPL. The RAM 503 is used as a working area for the CPU 501.

The SSD 504 reads or writes various data under the control of the CPU 501. When being, for example, a smartphone, each of the communication terminals 7 and 9 may not include the SSD 504. A hard disk drive (HDD) may be used instead of the SSD 504.

The external device connection I/F 505 is an interface that connects to various external devices (apparatuses). Examples of such external devices include a display, a speaker, a keyboard, a mouse, a universal serial bus (USB) memory, and a printer.

The network I/F 506 is an interface for data communication via the communication network 100.

The display 507 is a display unit such as a liquid crystal display (LCD) or an organic electroluminescence (EL) display that displays various images.

The operation device 508 is an input unit such as various operation buttons, a power switch, a shutter button, and a touch panel for operations including selecting or executing various instructions, selecting a processing target, and moving a cursor.

The medium I/F 509 controls reading and writing (storing) data from or to a recording medium 509m such as a flash memory. Examples of the recording medium 509m include a digital versatile disc (DVD) and a BLU-RAY DISC.

The CMOS sensor 511 is a built-in imaging unit that captures a subject under the control of the CPU 501 and obtains image data. A CCD sensor may be used instead of the CMOS sensor.

The speaker 512 is a circuit that generates sound such as music or voice by converting an electrical signal into physical vibration.

The positioning device 314 receives a positioning signal including position information (latitude, longitude, and altitude) of each of the communication terminals 7 and 9 using a GNSS satellite such as a GPS satellite or using an IMES as an indoor GPS.

The bus line 510 includes an address bus and a data bus. The bus line 510 electrically connects the components, such as the CPU 501, with each other.

Functional Configuration

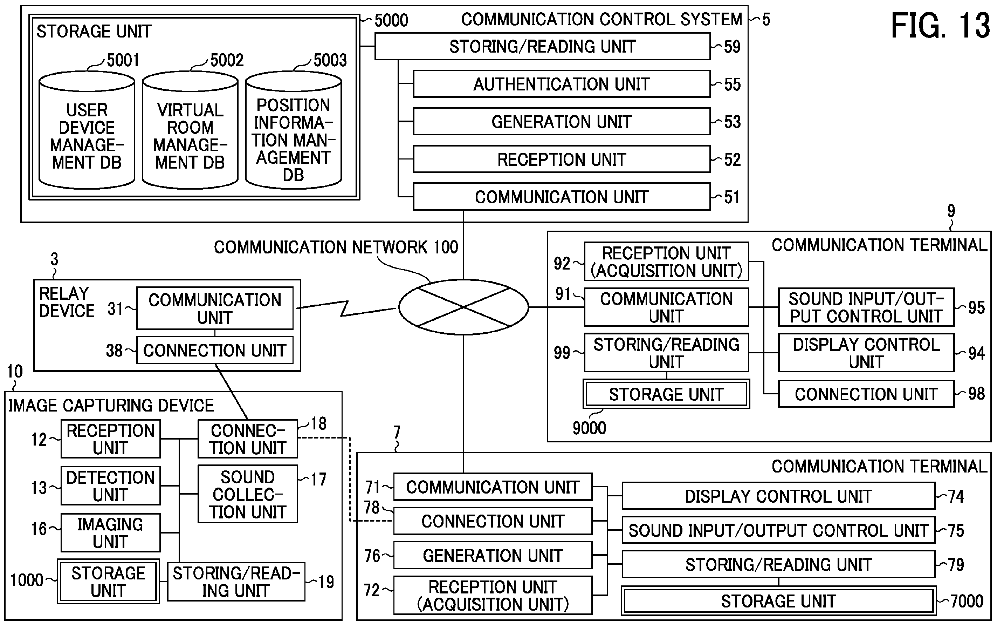

A functional configuration of the communication system 1 is described below with reference to FIGS. 13 to 16.

Functional Configuration of Imaging Device

As illustrated in FIG. 13, the imaging device 10 includes a reception unit 12, a detection unit 13, an imaging unit 16, a sound collection unit 17, a connection unit 18, and a storing/reading unit 19. Each of the above-mentioned units is a function or a means that is implemented by operating any one or more of the components illustrated in FIG. 10 according to instructions from the CPU 111 executing a program for an imaging device after the program is loaded from the SRAM 113 to the DRAM 114.

The imaging device 10 further includes a storage unit 1000 that is implemented by the ROM 112, the SRAM 113, and the DRAM 114 illustrated in FIG. 9.

Functional Units of Imaging Device

The reception unit 12 of the imaging device 10 is implemented by processing of the operation unit 115 for the CPU 111 and receives an operation input from the user.

The detection unit 13 is implemented by, for example, processing of the CPU 111 for a component such as the electronic compass 118, the gyro sensor 119, or the acceleration sensor 120 and obtains attitude information by detecting the attitude of the imaging device 10.

The imaging unit 16 is implemented by, for example, processing of the CPU 111 for the imaging unit 101, the image processor 104, or the imaging controller 105 and images, for example, scenery to obtain a captured image.

The sound collection unit 17 is implemented by, for example, processing of the CPU 111 for the audio processor 109 and collects sound around the imaging device 10.

The connection unit 18 is implemented by, for example, processing of the CPU 111 for the input/ output I/F 116 and establishes communication with the relay device 3.

The storing/reading unit 19 is implemented by, for example, processing of the CPU 111 and stores various data (or information) in the storage unit 1000 or reads various data (or information) from the storage unit 1000.

Functional Configuration of Relay Device

As illustrated in FIG. 13, the relay device 3 includes a communication unit 31 and a connection unit 38. Each of the above-mentioned units is a function or a means that is implemented by operating any one or more of the components illustrated in FIG. 11 according to instructions from the CPU 301 executing a program for the relay device 3 after the program is loaded from the EEPROM 304 to the RAM 303.

Functional Configuration of Relay Device 3

The communication unit 31 of the relay device 3 is implemented by, for example, processing of the CPU 301 for the communication device 313 illustrated in FIG. 11 and establishes data communication with the imaging device 10 and the communication control system 5 via the communication network 100.

The connection unit 38 is implemented by, for example, processing of the CPU 301 for the input/output I/F 316 and establishes data communication with the imaging device 10.

Functional Configuration of Communication Control System

The functional units of the communication control system 5 are described below in detail with reference to FIG. 13. The communication control system 5 includes a communication unit 51, a reception unit 52, a generation unit 53, an authentication unit 55, and a storing/reading unit 59. Each of the above-mentioned units is a function or a means that is implemented by operating any one or more of the components illustrated in FIG. 12 according to instructions from the CPU 501 executing a program for the communication control system 5 after the program is loaded from the SSD 504 to the RAM 503.

The communication control system 5 further includes a storage unit 5000 that is implemented by the RAM 503 and the SSD 504 illustrated in FIG. 12. The storage unit 5000 includes a user/device management database (DB) 5001, a virtual room management DB 5002, and a position information management DB 5003.

User/Device Management DB

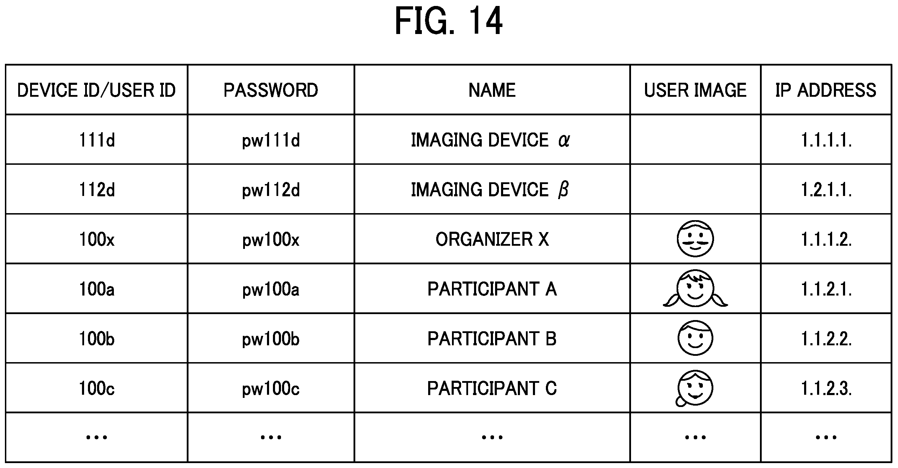

FIG. 14 is a schematic diagram of a user/device management table. The user/device management DB 5001 includes a user/device management table illustrated in FIG. 14. In the user/device management table, data items of user ID (or device ID), password, name, user image, and internet protocol (IP) address are associated with each other and managed.

The user ID is an example of user identification information for identifying a user, such as the organizer X, the participant A, or the participant B. The device ID is an example of device identification information for identifying a device such as the imaging device 10. When a head mounted display or a similar device is used in addition to the imaging device 10, the head mounted display or the similar device is also regarded as a device.

The name is the name of the user or the device. A user name may be the name of the communication terminal used by the user.

The user image is, for example, an image obtained by schematically modeling the face of the user, an image of a photograph of the face of the user. The user image is preregistered by the user.

The IP address is an example of destination identifying information of the device such as the communication terminal 7, communication terminal 9, or the imaging device 10 used by the user.

Virtual Room Management DB

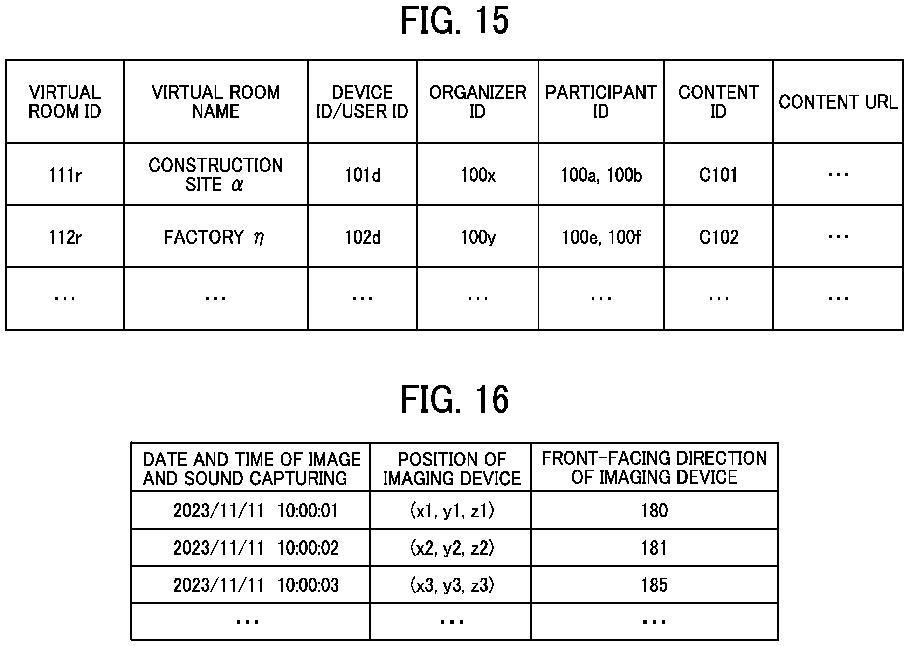

FIG. 15 is a schematic diagram of a virtual room management table. The virtual room management DB 5002 includes a virtual room management table illustrated in FIG. 15. In the virtual room management table, data items of virtual room ID, virtual room name, device ID, organizer ID, participant ID, content ID, and content uniform resource locator (URL) (storage location information of content data including image data and audio data) are associated with each other and managed.

The virtual room ID is an example of virtual room identification information for identifying a virtual room.

The virtual room name is the name of the virtual room and is assigned by, for example, the user.

The device ID is the same as the device ID in FIG. 14 and is the ID of a device that has joined the virtual room indicated by the virtual room ID in the same record.

The organizer ID is an example of organizer identification information for identifying the organizer ID among the user IDs in FIG. 14 and is an ID of the organizer who participates in the virtual room indicated by the virtual room ID in the same record.

The participant ID is an example of participant identification information for identifying a participant ID among the user IDs in FIG. 14 and is an ID of a participant who participates in a virtual room indicated by the virtual room ID in the same record.

The content ID is an example of content identification information for identifying content data including image data and sound data. The image in this case is a wide-field image obtained at the time of imaging, and the sound including voice is obtained at the same time of imaging.

The content URL is an example of content storage location information indicating a location where content (wide-field image, sound information) data is stored. The content URL is stored in association with the content data and the time of imaging (image recording) and sound capturing (sound recording). The time indicates the start and end date and time of the image capturing (recording) and the sound capturing (recording).

Position Information Management DB

FIG. 16 is a schematic diagram illustrating a position information management table. The position information management DB 5003 includes a position information management table illustrated in FIG. 16. In the position information management table, data items of "imaging and sound capturing" date and time and device position are associated with each other and managed. When sound capturing is not performed, the date and time of imaging is stored. The device position indicates the position of the imaging device 10 or the communication terminal 7 or 9 at the time of imaging. The position of the imaging device 10 is measured by the positioning device 314 of the relay device 3 to which the imaging device 10 is attached. The positions of the communication terminals 7 and 9 are measured by the positioning devices 514 of the communication terminals 7 and 9. A positioning unit similar to the positioning device 314 may be provided for the imaging device 10, and the position of the imaging device 10 may be measured by this positioning unit.

The content ID illustrated in FIG. 16 is the same as the content ID illustrated in FIG. 15.

The date and time of imaging and sound capturing indicates the date and time of imaging and sound capturing by the imaging device 10 or the communication terminal 7.

The device position indicates the position (absolute position on the earth) of the imaging device 10 or the communication terminal 7 at the date and time of imaging and sound capturing.

Functional Configuration of Communication Control System

The functional units of the communication control system 5 are described below in detail with reference to FIG. 13.

The communication unit 51 of the communication control system 5 is implemented by, for example, the processing of the CPU 501 for the network I/F 506 illustrated in FIG. 12 and establishes data communication with other devices (the relay device 3, the communication terminals 7 and 9) via the communication network 100.

The reception unit 52 is implemented by processing of the operation device 508 for the CPU 501 and receives an operation input from the user (for example, a system administrator).

The generation unit 53 is implemented by, for example, processing of the CPU 501 and generates, using data stored in the storage unit 5000, a screen to be transmitted to each of the communication terminals 7 and 9.

The authentication unit 55 authenticates, for example, whether the user has the authority to use the virtual room.

The storing/reading unit 59 is implemented by, for example, processing of the CPU 501 and stores various data (or information) in the storage unit 5000 or reads various data (or information) from the storage unit 5000.

Functional Configuration of Communication Terminal 7

The functional configuration of the communication terminal 7 is described below in detail with reference to FIG. 13. The communication terminal 7 includes a communication unit 71, a reception unit 72, a display control unit 74, a sound input/output control unit 75, a generation unit 76, a connection unit 78, and a storing/reading unit 79. Each of the above-mentioned units is a function or a means that is implemented by operating any one or more of the components illustrated in FIG. 12 according to instructions from the CPU 501 executing a program for the communication terminal 7 after the program is loaded from the SSD 504 to the RAM 503.

The communication unit 71 of the communication terminal 7 is implemented by, for example, processing of the CPU 501 for the network I/F 506 illustrated in FIG. 12 and establishes data communication with other devices (the communication control system 5) via the communication network 100.

The reception unit 72 is implemented by, for example, processing of the operation device 508 for the CPU 501 and receives an operation input from the user, such as the organizer X. The reception unit 72 is an example of an acquisition unit and acquires the viewpoint information (field-of-view information) for specifying a predetermined area when an operation for displaying the predetermined area in the wide-field image is received from the user.

The display control unit 74 is implemented by, for example, processing of the CPU 501 and causes the display 507 of the communication terminal 7 or an external display connected to the external device connection I/F 505 to display various images.

The sound input/output control unit 75 is implemented by, for example, processing of the CPU 501 of the communication terminal 7 and causes an external microphone connected to the external device connection I/F 505 to capture sound. When a microphone is built into the communication terminal 7, the sound input/output control unit 75 causes the built-in microphone to capture sound. The sound input/output control unit 75 further causes the speaker 512 of the communication terminal 7 or an external speaker connected to the external device connection I/F 505 to output sound.

The generation unit 76 is implemented by, for example, processing of the CPU 501 and adds, for example, narration and on-screen text to content data obtained by image recording and sound recording by the communication terminal 7 to generate content data for educational materials and similar purposes.

The storing/reading unit 79 is implemented by, for example, processing of the CPU 501 and stores various data (or information) in the storage unit 7000 or reads various data (or information) from the storage unit 7000.

Functional Configuration of Communication Terminal 9

The functional configuration of the communication terminal 9 is described below in detail with reference to FIG. 13.

The communication terminal 9 includes a communication unit 91, a reception unit 92, a display control unit 94, a sound input/output control unit 95, a connection unit 98, and a storing/reading unit 99. Each of the above-mentioned units is a function or a means that is implemented by operating any one or more of the components illustrated in FIG. 12 according to instructions from the CPU 501 executing a program for the communication terminal 9 after the program is loaded from the SSD 504 to the RAM 503.

The communication terminal 9 further includes a storage unit 9000 that is implemented by the RAM 503 and the SSD 504 illustrated in FIG. 12.

The communication unit 91 of the communication terminal 9 is implemented by, for example, processing of the CPU 501 for the network I/F 506 and establishes data communication with other devices (the communication control system 5) via the communication network 100.

The reception unit 92 is implemented by, for example, processing of the operation device 508 for the CPU 501 and receives an operation input from the user, such as a participant. The reception unit 92 is an example of an acquisition unit and acquires the viewpoint information (field-of-view information) for specifying a predetermined area when an operation for displaying the predetermined area in the wide-field image is received from the user.

The display control unit 94 is implemented by, for example, processing of the CPU 501 and causes the display 507 of the communication terminal 9 or an external display connected to the external device connection I/F 505 to display various images. For example, the display control unit 94 displays at least a partial area of a captured image corresponding to an elapsed playback time of the moving image obtained at an imaging position among a plurality of imaging positions on a past movement path of the imaging device performing the imaging, based on a distance to the image identifying the object. Specifically, the display control unit 94 displays at least a partial area of a captured image of the moving image corresponding to an elapsed playback time of the moving image obtained at an imaging position among the top predetermined number of imaging positions having the shortest distances to a reference position in the image identifying the object from among a plurality of imaging positions on a past movement path of the imaging device performing the imaging. In this case, the display control unit 94 displays a predetermined-area image in which a predetermined object is displayed as at least a partial area of the captured image.

The sound input/output control unit 95 is implemented by, for example, processing of the CPU 501 of the communication terminal 9 and causes an external microphone connected to the external device connection I/F 505 to capture sound. When a microphone is built into the communication terminal 7, the sound input/output control unit 75 causes the built-in microphone to capture sound. The sound input/output control unit 95 further causes the speaker 512 of the communication terminal 9 or an external speaker connected to the external device connection I/F 505 to output sound.

The connection unit 98 is implemented by, for example, processing of the CPU 501 for the external device connection I/F 505 and establishes data communication with an external device connected by wire or wirelessly.

The storing/reading unit 99 is implemented by, for example, processing of the CPU 501 and stores various data (or information) in the storage unit 9000 or reads various data (or information) from the storage unit 9000.

Processes/Operations

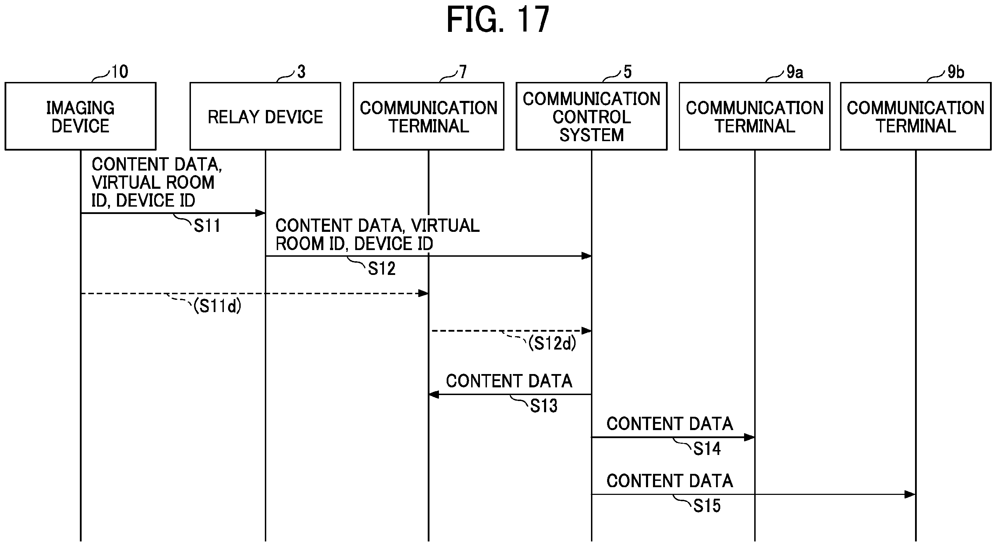

Processes or operations according to the present embodiment are described below with reference to FIG. 17 to FIG. 36. The processes described below processes after the imaging device 10 and the communication terminals 7 and 9 have already participated in the same virtual room.

Process for Transmitting Content Data in Communication System

A process for transmitting content data in the communication system 1 is described with reference to FIG. 17. FIG. 17 is a sequence diagram illustrating transmitting a wide-field image and field of view information in the communication system 1. In the following description of the process, the imaging device 10, the communication terminal 7 used by the organizer X, the communication terminal 9a used by the participant A, and the communication terminal 9b used by the participant B are in the same virtual room. The storing/reading unit 79 adds one record corresponding to the virtual room that is set up to the virtual room management DB 5002 (see FIG. 15), and the virtual room ID, the virtual room name, the device ID, the organizer ID, and the participant ID are managed in association with each other as the record. The content ID, the content URL, and the field-of-view information URL are stored later. The processing of Steps Step S11 to Step S15 of FIG. 17 is repeatedly performed, for example, about 30 times or 60 times per second.

Step S11: The imaging device 10 acquires content (wide-field image and sound information) data by performing sphere imaging at (within) the site Sa and capturing sound by the imaging unit 16, and then, transmits the content data to the relay device 3 by the connection unit 18. In this case, the connection unit 18 also transmits the virtual room ID for identifying the virtual room in which the imaging device 10 participates and the device ID for identifying the imaging device 10. Accordingly, the relay device 3 acquires the content data, the virtual room ID, and the device ID by the connection unit 38.

Step S12: The relay device 3 transmits to the communication control system 5 via the communication network 100 the content data, the virtual room ID, and the device ID received by the connection unit 38 in Step S11, by the communication unit 31. Accordingly, the communication control system 5 receives the content data, the virtual room, and the device ID by the communication unit 51.

The imaging device 10 may transmit the content data, the virtual room ID, and the device ID to the communication terminal 7 without transmitting to the relay device 3 (Step S11d). In this case, the communication terminal 7 transmits the content data, the virtual room ID, and the device ID to the communication control system 5 (Step S12d).

Step S13: The communication control system 5 searches the virtual room management DB 5002 based on the virtual room ID received in Step S12 to read the user IDs (the organizer ID and the participant IDs) of the users who participate in the same virtual room as the imaging device 10, by the storing/reading unit 59. The storing/reading unit 59 also searches the user/device management DB 5001 based on the read organizer ID and participant IDs to read the corresponding user images of the organizer X and the participants A and B and the corresponding IP addresses of the communication terminal 7, the communication terminal 9a, and the communication terminal 9b. The communication unit 51 refers to the IP address of the communication terminal 7 and transmits the content data received in Step S12 to the communication terminal 7. Accordingly, the communication terminal 7 receives the content data by the communication unit 71. At this time, the communication unit 51 may transmit the user images and the user IDs of the users participating in the same virtual room in association with each other to the communication terminal 7.

Step S14: The communication control system 5 refers to the IP address of the communication terminals 9a and transmits the content data received in Step S12 to the communication terminal 9a, by the communication unit 51. Accordingly, the communication terminal 9a receives the content data by the communication unit 91. At this time, the communication unit 51 may transmit the user images and the user IDs of the users participating in the same virtual room in association with each other to the communication terminal 9a.

Step S15: The communication control system 5 refers to the IP address of the communication terminals 9b and transmits the content data received in Step S12 to the communication terminal 9b, by the communication unit 51. Accordingly, the communication terminal 9b receives the content data by the communication unit 91. At this time, the communication unit 51 may transmit the user images and the user IDs of the users participating in the same virtual room in association with each other to the communication terminal 9b.

Through the above-described process, for example, in the communication terminal 9a, the display control unit 94 displays a predetermined-area image (see FIG. 6B) indicating a predetermined area (see FIG. 6A) in the wide-field image received in the processing of Step S14, and the sound input/output control unit 95 outputs sound based on the sound information received in the processing Step S14. Further, when the reception unit 92 receives an operation performed by the participant A on the screen for changing the predetermined area T (see FIG. 6A) to the predetermined area T' (see FIG. 6C) including, for example, an object in which the participant A is interested, the display control unit 94 displays the predetermined-area image (see FIG. 6D) corresponding to the predetermined area T'.

Process for Starting Image Recording and Sound Recording in Communication System

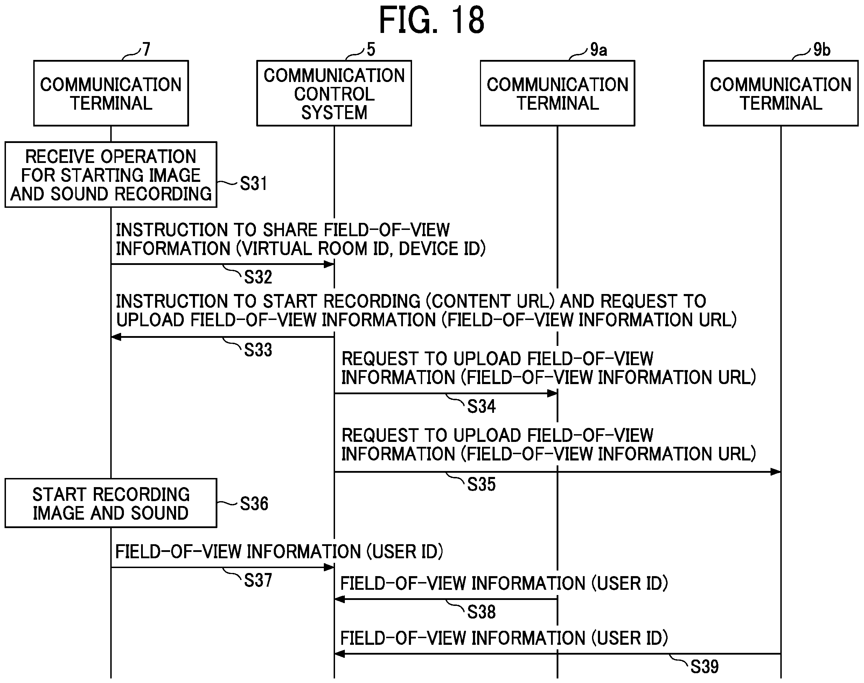

A process for starting image recording and audio recording in the communication system 1 is described below with reference to FIG. 18. FIG. 18 is a sequence diagram illustrating a process for starting image recording and sound recording in the communication system 1.

Step S31: The communication terminal 7 receives an operation to start image recording and sound recording from the organizer X by the reception unit 72.

Step S32: Before starting image recording and sound recording, the communication terminal 7 transmits an instruction to share field-of-view information (sharing instruction) to the communication control system 5 by the communication unit 71. The sharing instruction includes the virtual room ID of the virtual room in which the communication terminal 7 participates and the device ID of the imaging device 10.

Accordingly, the communication control system 5 receives the sharing instruction to share the field-of-view information by the communication unit 51.

Step S33: The communication control system 5 sets the content URL and the field-of-view information URL in the virtual room management DB 5002 (see FIG. 15) by the storing/reading unit 59. Then, the communication unit 51 transmits an instruction to start recording and a request to upload field-of-view information to the communication terminal 7. The instruction includes information indicating a content URL indicating a location where the communication terminal 7 stores the content data after recording. The request includes information indicating a field-of-view information URL for retaining the field-of-view information. Accordingly, the communication terminal 7 receives the instruction to start recording and the request to upload field-of-view information by the communication unit 71.

Step S34: The communication unit 51 transmits a request to upload field-of-view information to the communication terminal 9a. The request includes information on a URL for retaining field-of-view information. Accordingly, the communication terminal 9a receives the request to upload field-of-view information by the communication unit 91.

Step S35: Similarly, the communication unit 51 transmits a request to upload field-of-view information to the communication terminal 9b. The request includes information on a URL for retaining field-of-view information. Accordingly, the communication terminal 9b receives the request to upload field-of-view information by the communication unit 91.

Step S36: Subsequently, the communication terminal 7 starts recording of the content data received in Step S13 of FIG. 17, by the storing/reading unit 79 that is an example of a recording unit for image recording and sound recording. In the case of Step S 12d of FIG. 17, the communication terminal 7 may start image recording and sound recording of the content data received from the imaging device 10 in Step S11d, instead of the content data received from the communication control system 5 in Step S13.

Step S37: When receiving, by the reception unit 72, an operation for changing a field of view by the organizer X, while displaying, for example, the predetermined-area image (see FIG. 6B) corresponding to the predetermined area (see FIG. 6A) of the wide-field image received in Step S13, the communication terminal 7 displays, by the display control unit 74, the predetermined-area image (see FIG. 6D) corresponding to the predetermined area (see FIG. 6C) that is changed from the previous predetermined area (see FIG. 6A) in the same wide-field image. In this case, the reception unit 72 is an example of an acquisition unit and acquires the field-of-view information (pan, tilt, fov) for specifying the predetermined area to be displayed on the display 507 in the wide-field image when an operation for displaying the predetermined area in the wide-field image is received from the user, such as the organizer X. Then, the communication unit 71 transmits the field-of-view information for specifying the changed predetermined area to the image information URL (communication control system 5) received in Step S33. The field-of-view information includes the user ID of the organizer X who uses the communication terminal 7 that is the transmission source. Accordingly, the communication control system 5 receives the field-of-view information by the communication unit 51. Then, the storing/reading unit 79 stores the user ID, the IP address of the transmission source, the field-of-view information, and the timestamp in a field-of-view information management DB. The timestamp indicates the time at which the field-of-view information is received in Step S37.

Step S38: Processing that is substantially the same as the processing of Step S37 is also performed between the communication terminal 9a and the communication control system 5 independently of the processing of Step S37. The user ID transmitted in this case is the user ID of the participant A.

Step S39: Processing that is substantially the same as the processing of Step S37 or the processing of Step S38 is also performed between the communication terminal 9b and the communication control system 5 independently of the processing of Step S37 and the processing of Step S38. The user ID transmitted in this case is the user ID of the participant B.

The processing of Step S37 to Step S39 may be collectively executed on the communication control system 5 at the end of the recording.

Process for Stopping Image Recording and Sound Recording in Communication System

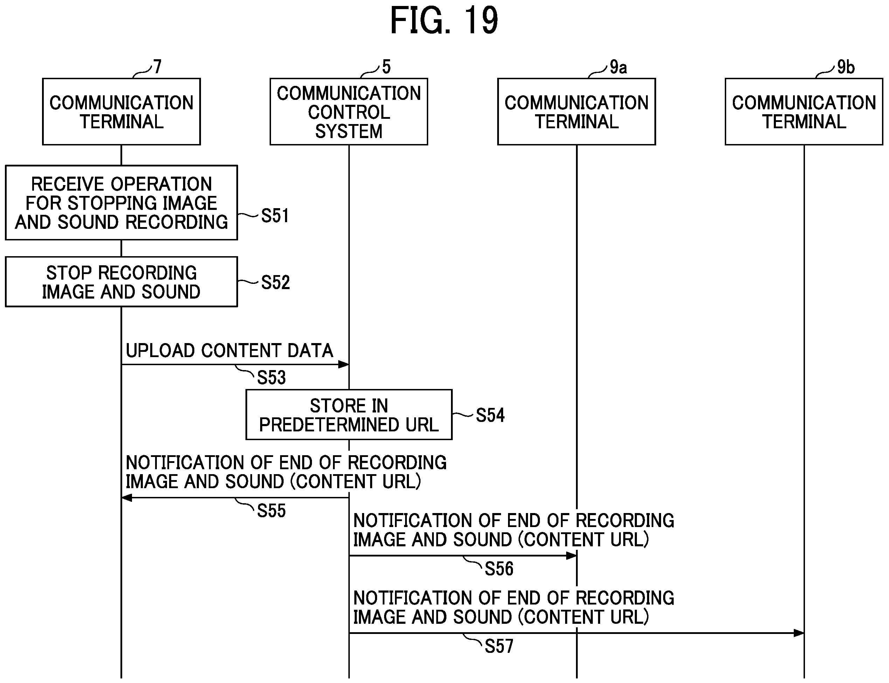

A process for stopping image recording and sound recording in the communication system 1 is described below with reference to FIG. 19. FIG. 19 is a sequence diagram illustrating a process for stopping image recording and sound recording in the communication system 1.

Step S51: The communication terminal 7 receives an operation for stopping image recording and sound recording from the organizer X by the reception unit 72.

Step S52: The storing/reading unit 79 stops image recording and sound recording.

Step S53: The communication unit 71 uploads (transmits) the recorded content to a predetermined content URL (communication control system 5) received in Step S33.

The content data includes a time (timestamp) from the start to the end of the recording. Accordingly, the communication control system 5 receives the content data by the communication unit 51.

Step S54: The communication control system 5 stores the content data along with the timestamp in the predetermined content URL by the storing/reading unit 59. Further, the storing/reading unit 59 converts the timestamps managed in the field-of-view information management DB into elapsed playback times corresponding to the total recording time of the content data of which the recording is stopped.

Step S55: The communication unit 51 transmits a notification of the end of the image recording and sound recording (end notification) to the communication terminal 7. The end notification includes information indicating a predetermined content URL. Accordingly, the communication terminal 7 receives the notification of the end of the image recording and sound recording by the communication unit 71.

Step S56: Similarly, the communication unit 51 transmits a notification of the end of the image recording and sound recording (end notification) to the communication terminal 9a. The end notification includes information indicating a predetermined content URL. Accordingly, the communication terminal 9a receives the notification of the end of the image recording and sound recording by the communication unit 91.

Step S57: Similarly, the communication unit 51 transmits a notification of the end of the image recording and sound recording (end notification) to the communication terminal 9b. The end notification includes information indicating a predetermined content URL. Accordingly, the communication terminal 9b receives the notification of the end of the image recording and sound recording by the communication unit 91.

In the case of the processing of Step S55, the end notification may not include a predetermined content URL.

Process for Playback of Recorded Image and Recorded Sound in Communication System

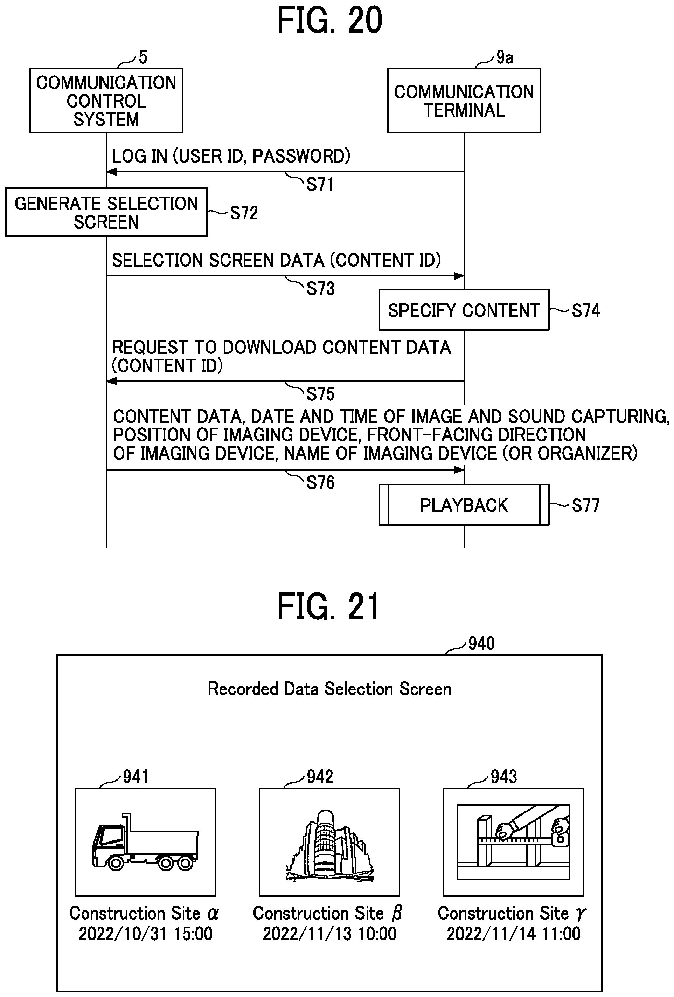

A process for playback of a recorded image and recorded sound in the communication system 1 is described below with reference to FIGS. 20 to 26. FIG. 20 is a sequence diagram illustrating a process for playback of a recorded image and recorded sound in the communication system 1. FIG. 21 is a diagram illustrating a recorded data selection screen. In this example, the participant A uses the communication terminal 9a to play recorded content.

Step S71: When receiving a login operation of inputting, for example, a login ID and a password from the user A by the reception unit 92, the communication terminal 9a transmits a login request to the communication control system 5 by the communication unit 91. The request includes the user ID and password of the user A. The communication control system 5 receives, by the communication unit 51, the login request and performs authentication, by the authentication unit 55, by referring to the user/device management DB 5001 (see FIG. 14). The following description is given on the assumption that the user A is determined to be a valid accessor by the login authentication.

Step S72: The communication control system 5 generates a recorded data selection screen 940 as illustrated in FIG. 21, the generation unit 53. In this case, the storing/reading unit 59 searches the virtual room management DB 5002 (see FIG. 15) using the user ID received in Step S71 as a search key and reads all the corresponding virtual room IDs, virtual room names, and content URLs. Then, the generation unit 53 generates thumbnails 941, 942, and 943 using an image of the corresponding content data (with a timestamp) stored in the content URL. Thus, the generation unit 53 adds a virtual room name, such as a "construction site α," and a recording time, such as "2022/10/31 15:00" indicating a predetermined time (for example, a recording start time) of a timestamp for each thumbnail.

Step S73: The communication unit 51 transmits the selection screen generated in Step S72 to the communication terminal 9a. The selection screen data includes content IDs each of which identifies a wide-field image used as the source for a corresponding thumbnail. The communication terminal 9a receives the selection screen data by the communication unit 91.

Step S74: The communication terminal 9a displays the recorded data selection screen 940 as illustrated in FIG. 21 on the display 507 of the communication terminal 9a by the display control unit 94. Then, the reception unit 92 receives an operation for specifying (selection of) a predetermined thumbnail from the participant A. The following description is given on the assumption that the thumbnail 941 is specified (selected).

Step S75: The communication unit 71 transmits a request to download the content data used as the source for the selected thumbnail 941 to the communication control system 5. This request includes the content ID associated with the thumbnail 941. Accordingly, the communication control system 5 receives the request to download the content data by the communication unit 51.

Step S76: The communication control system 5 searches the virtual room management DB 5002 (see FIG. 15) using the content ID received in Step S75 as a search key by the storing/reading unit 59. The content data also includes a map, which is described later. The storing/reading unit 59 searches the position information management DB 5003 (see FIG. 16) using the content ID received in the processing of Step S75 as a search key and reads the corresponding information on the imaging date and time, the sound capturing date and time, the imaging device position, and the front-facing direction (direction) of the imaging device. Further, the storing/reading unit 59 searches the virtual room management DB 5002 (see FIG. 15) using the content ID received in the processing of Step S75 as a search key and reads the corresponding device ID or user ID. Then, the storing/reading unit 59 searches the user/device management DB 5001 (see FIG. 14) using the read device ID or user ID as a search key and reads the corresponding name. The name is the name of the imaging device 10, which is an imaging device, or the name of the operator who operated the communication terminal 7 to perform imaging.

The communication unit 51 transmits the requested content data, the date and time of imaging and sound capturing, the imaging device position, and the name of the imaging device (or the name of the operator of the imaging device) to the communication terminal 9a. Accordingly, the communication unit 91 of the communication terminal 9a receives the content date, the date and time of imaging and sound capturing, the imaging device position, and the name of the imaging device (or the name of the operator of the imaging device).

Step S77: The communication terminal 9a performs a playback process. That is, the communication terminal 9a displays a screen including a recorded image on the display 507 of the communication terminal 9a by the display control unit 94 and outputs sound by the sound input/output control unit 95.

Details of Playback Process

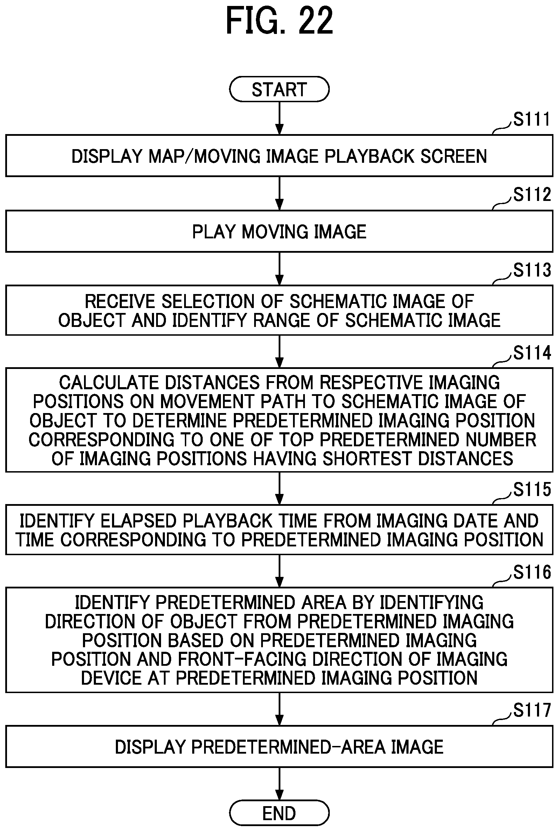

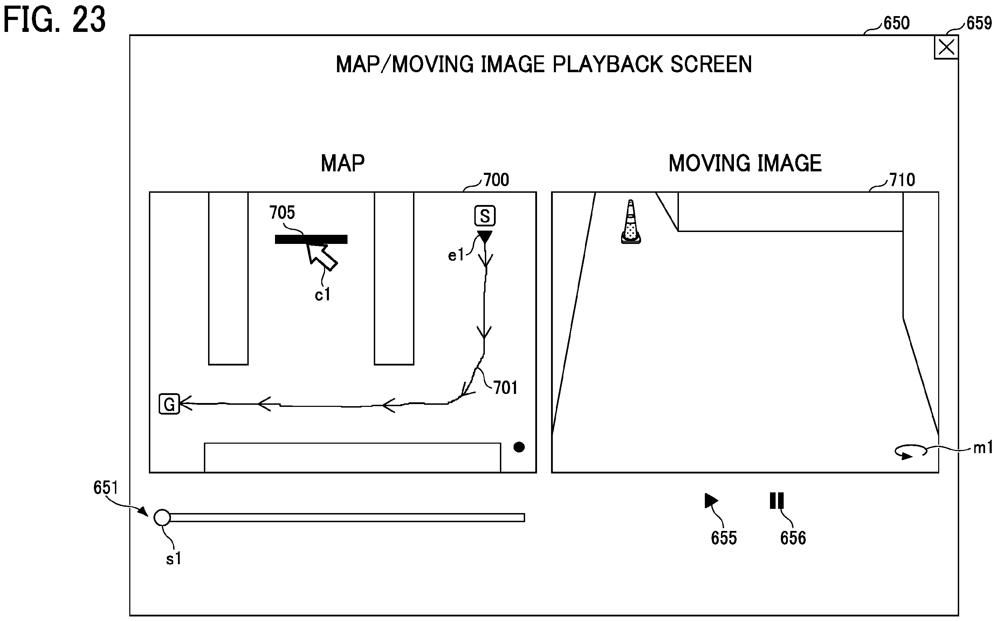

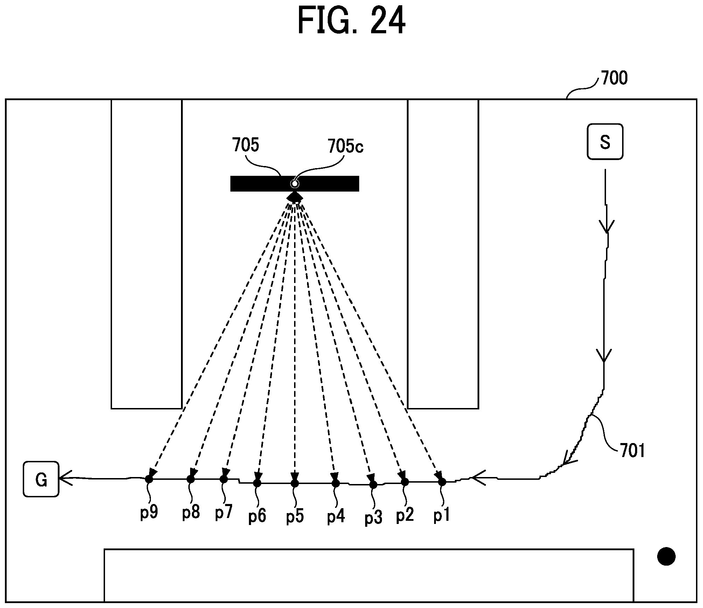

A process for displaying a screen including an image in the playback process of Step S77 is described below with reference to FIGS. 22 to 26. FIG. 22 is a flowchart of a playback process performed by the communication terminal 9a. FIGS. 23, 25, and 26 are diagrams each illustrating a map/moving image playback screen displayed on the communication terminal 9a. FIG. 24 is a diagram illustrating positions on a past movement path, a distance from each position to the schematic image of an object, and the relationship between each of the positions and the distance.

S111: When the reception unit 92 receives an operation performed by the participant A, the display control unit 94 displays a map/moving image playback screen 650 illustrated in FIG. 23. The map/moving image playback screen 650 includes a map display area 700 and a moving image display area 710. In the map display area 700, a map indicating a location (position) of past imaging of a predetermined imaging device (for example, the imaging device 10) is displayed, and a past movement path (may be referred to as a "trajectory" or may be referred to as simply "movement path") 701 along which the predetermined imaging device has moved during imaging are displayed on the map. At the start of the movement path 701 and at the goal (end) of the movement path 701, "S" and "G" are displayed, respectively. The movement path 701 also includes a plurality of arrows indicating the movement directions in the past. On the movement path 701, a device icon e1 indicating the position of the imaging device at the time of imaging is displayed.

Further, a seek bar (may be referred to as a "playback bar") 651 is displayed below the map display area 700, and a slider s1 is displayed in the seek bar 651. The seek bar 651 indicates the total playback time of the moving image to be played in the moving image display area 710. The slider s1 in the seek bar 651 indicates the elapsed playback time of the moving image played in the moving image display area 710. The position of the slider s1 and the position of the display icon e1 are linked. When the position of the slider s1 is changed in the seek bar 651, the elapsed playback time of the moving image being played in the moving image display area 710 and the position of the device icon e1 are also changed in accordance with the position of the slider s1.

A mark m1 is displayed inside the moving image display area 710. The mark m1 indicates that the predetermined-area image displayed in the moving image display area 710 is changeable by the user (in the example, the participant A) (see FIGS. 6B to 6D) by changing the predetermined area (see FIGS. 6A to 6C) in the wide-field image.

A play button 655 for starting the playback of the moving image in the moving image display area 710 and a pause button 656 for temporarily stopping the playback of the moving image are displayed below the moving image display area 710. In FIG. 23, the seek bar 651 indicates the initial state of the playback of the moving image (the elapsed playback time is 0 second). Similarly, the position of the device icon e1 indicates the initial position.

Step S112: When the participant A presses the play button 655 illustrated in FIG. 23 with the cursor c1, the reception unit 92 of the communication terminal 9a receives the start of the playback of the moving image, and the display control unit 94 displays the moving image obtained through imaging performed by the imaging device (in the example, the imaging device 10) in the moving image display area 710. Then, the display control unit 94 moves the display icon e1 on the movement path 701 in the map display area 700 synchronized with (in accordance with) the elapsed playback time of the moving image. The device icon e1 illustrated in FIG. 23 is a triangle, but may be any shape. The device icon e1 is an example of an image identifying an imaging position. The image identifying an imaging position includes a user image and a thumbnail related to the moving image. In the case of the user image, the communication terminal 9a also receives the user image in the processing of Step S76 illustrated in FIG. 20. The display control unit 94 also changes the position (length) of the slider s1 in accordance with the elapsed playback time of the moving image.

As a result, the participant A can grasp the moving image obtained by the imaging device, a position (imaging position) at which the moving image was obtained through imaging performed by the imaging device on the movement path, and an elapsed playback position in the seek bar 651 in association with each other.

S 113: When the participant A selects a schematic image 705 of a desired object (in the example, a barricade) with the cursor c1 in the map display area 700, the reception unit 92 receives the selection of the schematic image 705. The schematic image of the object is an example of an object identification image, and the object identification image includes an image (picture) including the object and an icon represented by a shape for identifying the object. The display control unit 94 identifies the outline of the schematic image 705 (the range of the object) by the object recognition function included in the display control unit 94.

For the object recognition function, for example, technique disclosed in the following Reference 1, 2, or 3 is used.

Reference 1: (https://docs.ultralytics.com/)
Reference 2: deepface (https://github.com/serengil/deepface)
Reference 3: PoseNet

(https://www.tensorflow.org/lite/examples/pose_estimation/overview?hl=ja)

Further, as illustrated in FIG. 24, the display control unit 94 identifies a reference position 705c (for example, the center of gravity, the center) in the schematic image 705 from the identified outline of the schematic image 705.

S114: The display control unit 94 calculates distances from respective imaging positions p1 to p9 on the movement path 701 to the reference position 705c of the schematic image 705 to determine a predetermined imaging position corresponding to one of the top predetermined number of imaging positions having the shortest distances to the reference position 705c in the schematic image 705 among the respective imaging positions p1 to p9 on the past movement path. For example, in FIG. 24, when the top predetermined number of imaging positions having the shortest distances is three, any of the imaging positions p4, p5, or p6 is determined as the predetermined imaging position. For example, the predetermined imaging position may be the imaging position p5 that is the closest to the reference position 705c, or may be an imaging position randomly determined from among the imaging positions p4, p5, and p6.

S115: The display control unit 94 identifies the playback elapsed time from an imaging date and time corresponding to the predetermined imaging position (the position of the imaging device) (see FIG. 16). Accordingly, a wide-field image (still image frame) in which the desired object is displayed at the largest size is identified.

S 116: A predetermined area is identified as at least a partial area of the captured image (wide-field image) by identifying the direction of the object (schematic image 705) from the predetermined imaging position (imaging device position) based on the predetermined imaging position and the front-facing direction of the imaging device at the predetermined imaging position (see FIG. 16). By so doing, the predetermined-area image in which the desired object is displayed is identified in the wide-field image identified in the processing of Step S115.

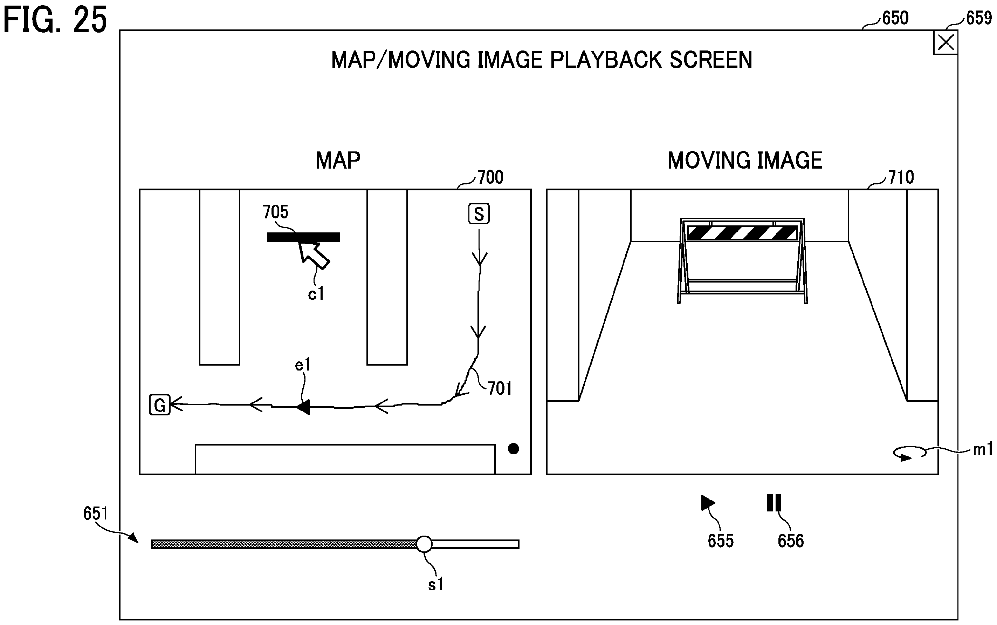

S117: The display control unit 94 displays the map and the moving image corresponding to the elapsed playback time identified in the processing of Step S115 as illustrated in FIG. 25. In this case, the display control unit 94 moves the device icon e1 to the imaging position p5 illustrated in FIG. 24 in the map display area 700 and moves the slider s1 to the position indicating the elapsed playback time identified in the processing of Step S115. The display control unit 94 displays the predetermined-area image of the predetermined area identified in the processing of Step S116 in the wide-field image of the elapsed playback time identified in the processing of Step S115 in the moving image display area 710. Accordingly, the participant A can search and view the predetermined-area image in which the desired object is displayed from the moving image of the wide-field image.

In FIG. 25, since the playback of moving image is in a paused state, when the participant A presses the play button 655, the display control unit 94 resumes the playback from the state illustrated in FIG. 25. The display control unit 94 may display the predetermined-area image as a still image (still image frame) cut out from the wide-field image of the moving image, instead of displaying the pause state of the playback of the moving image. In this case, the resume of the playback will not be from the state illustrated in FIG. 25.

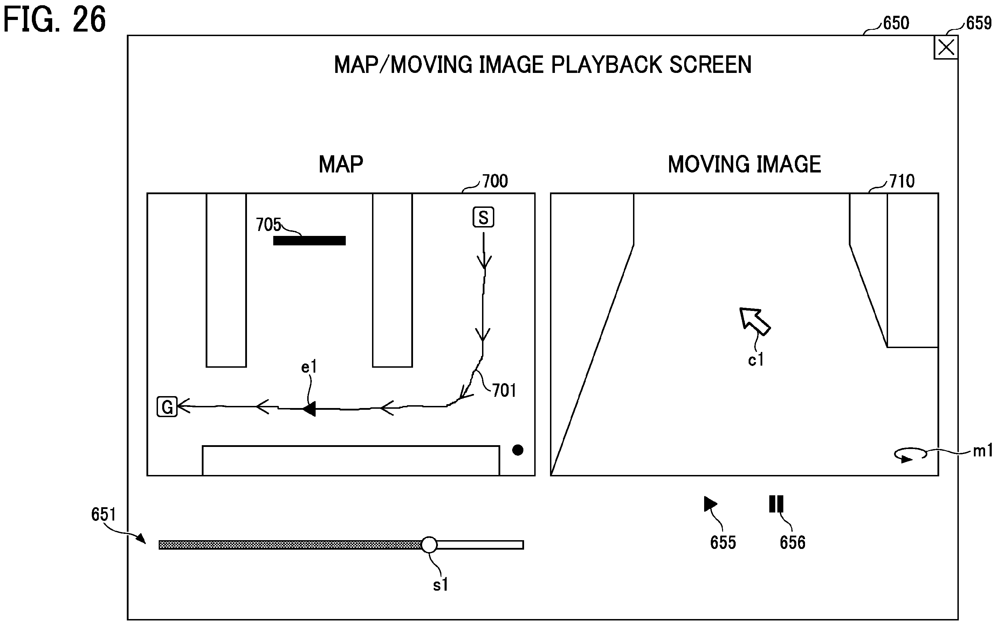

If the processing of Step S116 is not performed, as illustrated in FIG. 26, the predetermined-area image on the front (goal side) of the device icon e1 is displayed in the moving image display area 710, and thus the predetermined-area image in which the desired object is displayed may fail to be searched for. In this case, however, the participant A can view a desired object as illustrated in FIG. 25 by changing the field of view of the predetermined-area image (see FIGS. 6A to 6C) displayed in the moving image display area 710 and changing the predetermined-area image (see FIGS. 6B to 6D) displayed in the moving image display area 710 by operating the icon c1.

As described above, according to the present embodiment, the user can search for a still image in which a predetermined object is most visible in a moving image. As illustrated in FIG. 25, the display control unit 94 searches for and displays a still image frame captured at a predetermined imaging position (e.g., the imaging position p5) among the top predetermined number of imaging positions having shortest distances from the reference position 705c of the schematic image 705 of the desired object on the movement path 701 of the imaging device. This allows the user (e.g., the participant A) can search for a still image in which a predetermined object in the moving image is most visible.

Further, according to the present embodiment, the display control unit 94 displays the predetermined-area image in which the desired object is displayed in the wide-field image, and thus the user can reliably view the predetermined-area image in which the predetermined object is displayed even in the case of the moving image of the wide-field image.

The above-described embodiments are illustrative and do not limit the present disclosure. Thus, numerous additional modifications and variations are possible in light of the above teachings. Any one of the above-described operations may be performed in various other ways, for example, in an order different from the one described above.

The "processing circuit or circuitry" in the specification includes a programmed processor to execute each function by software, such as a processor implemented by an electronic circuit, and devices, such as an application-specific integrated circuit (ASIC), a digital signal processor (DSP), a field-programmable gate array (FPGA), and conventional circuit modules designed to perform the recited functions.

The above-described programs may be stored in a (non-transitory) recording medium such as a DVD-ROM to be distributed domestically or internationally as a program product.

The number of each of the CPU 111, the CPU 301, the CPU 501, and the CPU 801 serving as a processor that is hardware may be a single or multiple.

An aspect of the present disclosure can be described as follows.

Aspect 1

A display terminal displays, on a display, a moving image previously obtained through imaging performed by an imaging device and a map indicating a position related to the imaging. The display terminal includes a reception unit to receive selection of an image identifying an object indicated in the map. The display terminal includes a display control unit to display at least a partial area of a captured image corresponding to a playback elapsed time of the moving image obtained at an imaging position corresponding to one of the top predetermined number of imaging positions having the shortest distances from a reference position in an image identifying the object. The imaging position is one of a plurality of imaging positions on a past movement path of an imaging device performing the imaging. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. A display terminal (9) to display a moving image previously obtained through imaging performed by an imaging device (10) and a map indicating a position related to the imaging, the display terminal (9) comprising:

   a reception unit (501, 92) configured to receive selection of an image identifying an object on the map; and
   a display control unit (501, 94) configured to display, on a display (507), at least a partial area of a captured image corresponding to an elapsed playback time of the moving image obtained at an imaging position, based on a distance to the image identifying the object, the imaging position being one of a plurality of imaging positions on a past movement path of the imaging device performing the imaging.

2. The display terminal (9) of claim 1, wherein the display control unit (501, 94) is configured to display, on the display (507), a predetermined-area image representing at least the partial area of the captured image, the predetermined-area image including the object.

3. The display terminal (9) of claim 1, wherein the moving image is a wide-field image.

4. The display terminal (9) of claim 1, wherein the display control unit (501, 94) is further configured to:

   determine the imaging position from among the plurality of imaging positions, the imaging position corresponding to one of a top predetermined number of imaging positions having shortest distances from a reference position in the image identifying the object;
identify the elapsed playback time of the moving image based on an imaging date and time corresponding to the imaging position; and
display, on the display (507), at least the partial area of the captured image corresponding to the elapsed playback time.

5. The display terminal (9) of claim 4, wherein the imaging position has a shortest distance from the reference position in the image identifying the object, among the plurality of imaging positions.

6. The display terminal (9) of claim 2, wherein the display control unit (501, 94) is configured to:

   identify a direction of the object from the imaging position based on the imaging position and a front-facing direction of the imaging device (10) at the imaging position; and
   display, on the display (507), the predetermined-area image representing at least the partial area of the captured image.

7. A display method, comprising:

   displaying (S111, S112) on a display (507), a moving image previously obtained through imaging performed by an imaging device (10) and a map indicating a position related to the imaging;
   receiving (S113) selection of an image identifying an object on the map; and
   displaying (S117), on the display, at least a partial area of a captured image corresponding to an elapsed playback time of the moving image obtained at an imaging position, based on a distance to the image identifying the object, the imaging position being one of a plurality of imaging positions on a past movement path of the imaging device performing the imaging.

8. A carrier means carrying computer-readable codes for controlling a computer to carry out the method according to claim 7.

# FIG. 1A

103b — 103a

10

# FIG. 1B

103b

115

10

# FIG. 1C

103b — 103a

10

EP 4 611 384 A1

FIG. 2

# FIG. 3A

HEMISPHERICAL IMAGE (FRONT)

# FIG. 3B

HEMISPHERICAL IMAGE (BACK)

# FIG. 3C

CAPTURED IMAGE (EQUIRECTANGULAR PROJECTION IMAGE EC)

# FIG. 4A

EQUIRECTANGULAR
PROJECTION IMAGE EC

# FIG. 4B

SPHERICAL IMAGE CE

# FIG. 5

VIRTUAL CAMERA IC

VIRTUAL CAMERA IC

SPHERICAL IMAGE CE (SPHERE CS)

PREDETERMINED-AREA IMAGE Q (PREDETERMINED AREA T)

SPHERICAL IMAGE CE (SPHERE CS)

PREDETERMINED-AREA IMAGE Q (PREDETERMINED AREA T)

(FRONT)

(SIDE)

PREDETERMINED-AREA IMAGE Q (PREDETERMINED AREA T)

SPHERICAL IMAGE CE (SPHERE CS)

VIRTUAL CAMERA IC

(TOP)

# FIG. 6A

VIRTUAL
CAMERA IC

SPHERE CS

PREDETERMINED-AREA IMAGE Q
(PREDETERMINED AREA T)

# FIG. 6B

# FIG. 6C

VIRTUAL
CAMERA IC

SPHERE CS

PREDETERMINED-AREA IMAGE Q'
(PREDETERMINED AREA T')

# FIG. 6D

# FIG. 7

# FIG. 8

# FIG. 9

COMMUNICATION SYSTEM 1

COMMUNICATION CONTROL SYSTEM 5
(INFORMATION MANAGEMENT SYSTEM)

100

COMMUNICATION NETWORK

SITE Sa

IMAGING DEVICE 10

RELAY DEVICE 3

COMMUNICATION TERMINAL 7
[DISPLAY TERMINAL]

ORGANIZER X

COMMUNICATION TERMINAL 9 (9a,9b)
[DISPLAY TERMINAL]

PARTICIPANTS A, B

EP 4 611 384 A1

# FIG. 10

EP 4 611 384 A1

# FIG. 11

ANTENNA 313a

| 305 | 313 | 314 | 316 |
|---|---|---|---|
| CMOS | COMMUNICATION DEVICE | POSITIONING DEVICE | INPUT/OUTPUT I/F |

310

| CPU | ROM | RAM | EEPROM |
|---|---|---|---|

301 302 303 304

# FIG. 12

| CPU (501) | ROM (502) | RAM (503) | SSD (504) | CMOS (511) | POSITIONING DEVICE (514) |

510

| EXTERNAL DEVICE CONNECTION I/F (505) | NETWORK I/F (506) | DISPLAY (507) | OPERATION DEVICE (508) | MEDIUM I/F (509) | SPEAKER (512) |

STORAGE MEDIUM (509m)

EP 4 611 384 A1

# FIG. 13

**COMMUNICATION CONTROL SYSTEM** ~5

| STORAGE UNIT ~5000 | | |
|---|---|---|
| USER DEVICE MANAGEMENT DB ~5001 | VIRTUAL ROOM MANAGEMENT DB ~5002 | POSITION INFORMATION MANAGEMENT DB ~5003 |

STORING/READING UNIT ~59

AUTHENTICATION UNIT ~55

GENERATION UNIT ~53

RECEPTION UNIT ~52

COMMUNICATION UNIT ~51

**COMMUNICATION NETWORK 100**

**RELAY DEVICE** 3

31~ COMMUNICATION UNIT

38~ CONNECTION UNIT

**IMAGE CAPTURING DEVICE** 10

12~ RECEPTION UNIT

13~ DETECTION UNIT

16~ IMAGING UNIT

1000~ STORAGE UNIT

CONNECTION UNIT ~18

SOUND COLLECTION UNIT ~17

STORING/READING UNIT ~19

**COMMUNICATION TERMINAL** 9

92~ RECEPTION UNIT (ACQUISITION UNIT)

91~ COMMUNICATION UNIT

99~ STORING/READING UNIT

STORAGE UNIT
9000

SOUND INPUT/OUTPUT CONTROL UNIT ~95

DISPLAY CONTROL UNIT ~94

CONNECTION UNIT ~98

**COMMUNICATION TERMINAL** 7

71~ COMMUNICATION UNIT

78~ CONNECTION UNIT

76~ GENERATION UNIT

72~ RECEPTION UNIT (ACQUISITION UNIT)

DISPLAY CONTROL UNIT ~74

SOUND INPUT/OUTPUT CONTROL UNIT ~75

STORING/READING UNIT ~79

STORAGE UNIT ~7000

EP 4 611 384 A1

## FIG. 14

| DEVICE ID/USER ID | PASSWORD | NAME | USER IMAGE | IP ADDRESS |
|---|---|---|---|---|
| 111d | pw111d | IMAGING DEVICE $\alpha$ | | 1.1.1.1. |
| 112d | pw112d | IMAGING DEVICE $\beta$ | | 1.2.1.1. |
| 100x | pw100x | ORGANIZER X | | 1.1.1.2. |
| 100a | pw100a | PARTICIPANT A | | 1.1.2.1. |
| 100b | pw100b | PARTICIPANT B | | 1.1.2.2. |
| 100c | pw100c | PARTICIPANT C | | 1.1.2.3. |
| ... | ... | ... | ... | ... |

EP 4 611 384 A1

# FIG. 15

| VIRTUAL ROOM ID | VIRTUAL ROOM NAME | DEVICE ID/USER ID | ORGANIZER ID | PARTICIPANT ID | CONTENT ID | CONTENT URL |
|---|---|---|---|---|---|---|
| 111r | CONSTRUCTION SITE $\alpha$ | 101d | 100x | 100a, 100b | C101 | … |
| 112r | FACTORY $\eta$ | 102d | 100y | 100e, 100f | C102 | … |
| … | … | … | … | … | … | … |

# FIG. 16

| DATE AND TIME OF IMAGE AND SOUND CAPTURING | POSITION OF IMAGING DEVICE | FRONT-FACING DIRECTION OF IMAGING DEVICE |
|---|---|---|
| 2023/11/11  10:00:01 | (x1, y1, z1) | 180 |
| 2023/11/11  10:00:02 | (x2, y2, z2) | 181 |
| 2023/11/11  10:00:03 | (x3, y3, z3) | 185 |
| … | … | … |

EP 4 611 384 A1

# FIG. 17

EP 4 611 384 A1

# FIG. 18

| COMMUNICATION TERMINAL (7) | COMMUNICATION CONTROL SYSTEM (5) | COMMUNICATION TERMINAL (9a) | COMMUNICATION TERMINAL (9b) |

RECEIVE OPERATION FOR STARTING IMAGE AND SOUND RECORDING — S31

INSTRUCTION TO SHARE FIELD-OF-VIEW INFORMATION (VIRTUAL ROOM ID, DEVICE ID) — S32

INSTRUCTION TO START RECORDING (CONTENT URL) AND REQUEST TO UPLOAD FIELD-OF-VIEW INFORMATION (FIELD-OF-VIEW INFORMATION URL) — S33

REQUEST TO UPLOAD FIELD-OF-VIEW INFORMATION (FIELD-OF-VIEW INFORMATION URL) — S34

REQUEST TO UPLOAD FIELD-OF-VIEW INFORMATION (FIELD-OF-VIEW INFORMATION URL) — S35

START RECORDING IMAGE AND SOUND — S36

FIELD-OF-VIEW INFORMATION (USER ID) — S37

FIELD-OF-VIEW INFORMATION (USER ID) — S38

FIELD-OF-VIEW INFORMATION (USER ID) — S39

EP 4 611 384 A1

# FIG. 19

```
    7                      5                    9a                   9b
┌──────────────┐  ┌──────────────┐  ┌──────────────┐  ┌──────────────┐
│COMMUNICATION │  │COMMUNICATION │  │COMMUNICATION │  │COMMUNICATION │
│  TERMINAL    │  │  CONTROL     │  │  TERMINAL    │  │  TERMINAL    │
│              │  │  SYSTEM      │  │              │  │              │
└──────────────┘  └──────────────┘  └──────────────┘  └──────────────┘
```

RECEIVE OPERATION
FOR STOPPING IMAGE
AND SOUND RECORDING — S51

STOP RECORDING
IMAGE AND SOUND — S52

UPLOAD CONTENT DATA
S53

STORE IN
PREDETERMINED URL — S54

NOTIFICATION OF END OF RECORDING
IMAGE AND SOUND (CONTENT URL)
S55

NOTIFICATION OF END OF RECORDING
IMAGE AND SOUND (CONTENT URL)
S56

NOTIFICATION OF END OF RECORDING
IMAGE AND SOUND (CONTENT URL)
S57

# FIG. 20

COMMUNICATION CONTROL SYSTEM $\underset{\sim}{5}$

COMMUNICATION TERMINAL $\underset{\sim}{9a}$

LOG IN (USER ID, PASSWORD)
↙S71

GENERATE SELECTION SCREEN ~S72

SELECTION SCREEN DATA (CONTENT ID)
↘S73

SPECIFY CONTENT ~S74

REQUEST TO DOWNLOAD CONTENT DATA (CONTENT ID)
↘S75

CONTENT DATA, DATE AND TIME OF IMAGE AND SOUND CAPTURING, POSITION OF IMAGING DEVICE, FRONT-FACING DIRECTION OF IMAGING DEVICE, NAME OF IMAGING DEVICE (OR ORGANIZER)
↘S76

PLAYBACK ~S77

# FIG. 21

940

Recorded Data Selection Screen

941

942

943

Construction Site α
2022/10/31 15:00

Construction Site β
2022/11/13 10:00

Construction Site γ
2022/11/14 11:00

# FIG. 22

```
        ┌─────────────┐
        │    START    │
        └─────────────┘
               │
               ▼                                    S111
┌──────────────────────────────────────────────────┐
│      DISPLAY MAP/MOVING IMAGE PLAYBACK SCREEN      │
└──────────────────────────────────────────────────┘
               │
               ▼                                    S112
┌──────────────────────────────────────────────────┐
│               PLAY MOVING IMAGE                    │
└──────────────────────────────────────────────────┘
               │
               ▼                                    S113
┌──────────────────────────────────────────────────┐
│      RECEIVE SELECTION OF SCHEMATIC IMAGE OF       │
│   OBJECT AND IDENTIFY RANGE OF SCHEMATIC IMAGE     │
└──────────────────────────────────────────────────┘
               │
               ▼                                    S114
┌──────────────────────────────────────────────────┐
│    CALCULATE DISTANCES FROM RESPECTIVE IMAGING     │
│  POSITIONS ON MOVEMENT PATH TO SCHEMATIC IMAGE OF  │
│  OBJECT TO DETERMINE PREDETERMINED IMAGING POSITION│
│  CORRESPONDING TO ONE OF TOP PREDETERMINED NUMBER  │
│   OF IMAGING POSITIONS HAVING SHORTEST DISTANCES   │
└──────────────────────────────────────────────────┘
               │
               ▼                                    S115
┌──────────────────────────────────────────────────┐
│  IDENTIFY ELAPSED PLAYBACK TIME FROM IMAGING DATE  │
│  AND TIME CORRESPONDING TO PREDETERMINED IMAGING   │
│                    POSITION                        │
└──────────────────────────────────────────────────┘
               │
               ▼                                    S116
┌──────────────────────────────────────────────────┐
│     IDENTIFY PREDETERMINED AREA BY IDENTIFYING     │
│    DIRECTION OF OBJECT FROM PREDETERMINED IMAGING  │
│       POSITION BASED ON PREDETERMINED IMAGING      │
│    POSITION AND FRONT-FACING DIRECTION OF IMAGING  │
│      DEVICE AT PREDETERMINED IMAGING POSITION      │
└──────────────────────────────────────────────────┘
               │
               ▼                                    S117
┌──────────────────────────────────────────────────┐
│         DISPLAY PREDETERMINED-AREA IMAGE           │
└──────────────────────────────────────────────────┘
               │
               ▼
        ┌─────────────┐
        │     END     │
        └─────────────┘
```

# FIG. 23

MAP/MOVING IMAGE PLAYBACK SCREEN

MAP — 700
705
c1
S
e1
701
G

MOVING IMAGE — 710
m1

651
s1

655   656

EP 4 611 384 A1

# FIG. 24

EP 4 611 384 A1

# FIG. 25

EP 4 611 384 A1

# FIG. 26

EP 4 611 384 A1

# EUROPEAN SEARCH REPORT

**Application Number**

EP 25 15 7031

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 183218 A (NIKON CORP) 12 September 2013 (2013-09-12) | 1,2,6-8 | INV. H04N23/61 H04N21/00 |
| Y | * figure 12 * * paragraph [0027] - paragraph [0032] * | 3-5 | |
| Y | US 10 326 934 B2 (RICOH CO LTD [JP]) 18 June 2019 (2019-06-18) * column 7, line 27 - line 42 * * column 14, line 41 - line 55 * | 3-5 | |
| A | EP 4 312 432 A1 (RICOH CO LTD [JP]) 31 January 2024 (2024-01-31) * figures 24-28 * * paragraph [0203] - paragraph [0208] * | 1,7,8 | |

**TECHNICAL FIELDS SEARCHED (IPC)**

H04N

The present search report has been drawn up for all claims

| Place of search | Date of completion of the search | Examiner |
|---|---|---|
| The Hague | 25 June 2025 | Cooke, Edward |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 7031

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | | Publication date | Patent family member(s) | | Publication date |
|---|---|---|---|---|---|
| JP 2013183218 | A | 12-09-2013 | JP | 5987357 B2 | 07-09-2016 |
| | | | JP | 2013183218 A | 12-09-2013 |
| US 10326934 | B2 | 18-06-2019 | US | 2016165136 A1 | 09-06-2016 |
| | | | US | 2018139386 A1 | 17-05-2018 |
| | | | US | 2019253627 A1 | 15-08-2019 |
| EP 4312432 | A1 | 31-01-2024 | CN | 117479022 A | 30-01-2024 |
| | | | EP | 4312432 A1 | 31-01-2024 |
| | | | JP | 2024017224 A | 08-02-2024 |
| | | | US | 2024036791 A1 | 01-02-2024 |

EPO FORM P0459

For more details about this annex : see Official Journal of the European Patent Office, No. 12/82

**EP 4 611 384 A1**

**Patent documents cited in the description**

- JP 2013183218 A